# EUROPEAN PATENT SPECIFICATION

(11) **EP 4 365 067 B1**
(45) Date of publication and mention of the grant of the patent: **01.07.2026**
(21) Application number: 23208031.7
(22) Date of filing: 06.11.2023
(51) Int. Cl.: B62J 9/18, B62J 43/16, B62J 43/20, B62K 11/04, B60K 1/04, B60L 50/60, H01M 50/249, H01M 50/24, B60K 1/00

(54) **STRADDLED VEHICLE**
GRÄTSCHSITZFAHRZEUG
VÉHICULE À SELLE

(30) Priority: 07.11.2022 JP 2022178471
(43) Date of publication of application: 08.05.2024
(73) Proprietor: Kawasaki Motors, Ltd., Akashi, Hyogo 673-8666 (JP)
(72) Inventor: Kaji, Motoki, Akashi-shi, Hyogo, 673-8666 (JP)
(74) Representative: Witte, Weller & Partner Patentanwälte mbB

(56) References cited:
- EP-A1- 0 669 246
- CN-A- 1 282 695
- US-A1- 2004 195 855

## Description

### BACKGROUND OF THE INVENTION

### FIELD OF THE INVENTION

The present invention relates to a straddled vehicle including a structure that prevents water from entering an accommodating space of a case of the straddled vehicle.

### DESCRIPTION OF THE RELATED ART

International Publication No. 2015/068753 discloses an electric straddled vehicle including a driving wheel driven by a motor. The straddled vehicle includes a battery case. The battery case includes a case cover that can open and close an opening portion of the battery case such that the battery is put in or taken out from the battery case.

According to the configuration disclosed in International Publication No. 2015/068753, since there is the opening portion through which the battery is put in or taken out from the battery case, rain water easily enters the inside of the battery case.

CN 1282695 A discloses a sort of scooter-type vehicle, comprising a footrest floor supported at a lower position ahead of a seat, a parcel compartment formed in a rear body of the vehicle under the seat, and a swing power unit having at least a forward end accommodated below the parcel compartment, wherein a spark plug is mounted on the forward end of the swing power unit so as to look forwardly, the swing power unit is angled with respect to the footrest floor to that an extension line of the spark plug intersects the footrest flow from below, a through-hole for allowing a maintenance tool for the spark plug to be inserted therethrough is formed at a place where the extension line of the spark plug intersects the footrest floor, an upwardly opened electronics compartment for housing electronics is formed adjacently to the through-hole in the footrest floor, and a service lid is detachably mounted for tightly covering both the electronics compartment and the through-hole.

EP 0 669 246 A1 discloses a foot board structure of scooter type vehicle with a battery holder in which a battery is accommodated is formed integrally with the foot board between the left and right extending portions thereof, and a frame cover for covering the vehicle frame and the battery holder mounted to a generally V-shaped inner edge portion formed by the left and right extending portions of the foot board.

US 2004/195855 A1 discloses a structure of storage section for saddle-ridden type vehicle. The straddled vehicle disclosed by said US 2004/195855 A1 is according to the preamble of claim 1.

### SUMMARY OF THE INVENTION

An object of the present invention is to provide a straddled vehicle that can prevent water from entering an opening portion.

A straddled vehicle according to claim 1 includes: a base including a base opening through which an accommodating space is open to an upper side and an opposing portion located around the base opening; an outer lid that opens and closes the base opening; a projection that is located at one of the outer lid and the base, is located outside the base opening, and projects in an upper-lower direction toward the other of the outer lid and the base when the outer lid is in the position where it closes the base opening; and an outer wall that is located at the outer lid or the base, faces the projection from an outside, and is located between the outer lid and the opposing portion in the upper-lower direction when the outer lid is in the position where it closes the base opening. The opposing portion is inclined relative to a horizontal direction. The outer wall includes a drain passage that is located at a position lower than an upper end of the opposing portion and extends from an inside of the outer wall to an outside of the outer wall. The projection is a seal that seals a gap between the outer lid and the opposing portion in the upper-lower direction when the outer lid is in the position where it closes the base opening. The seal has an elongated shape that is longer than an outer periphery of the base opening; and the seal includes a portion where the seal partially overlaps itself in a radial direction of the base opening when the outer lid is in the position where it closes the base opening.

According to the present invention, since the outer wall is located between the outer lid and the opposing portion of the base in the upper-lower direction, both of the outer wall and the projection prevents water from entering the base opening. Moreover, water may flow over the outer wall and enter a space between the outer wall and the projection. Even in this case, the water flows downward by the inclination of the opposing portion and flows to the outside through the drain passage of the outer wall. Thus, the water is prevented from entering the accommodating space.

The above object, other objects, features, and advantages of the present invention will be made clear by the following detailed explanation of preferred embodiments with reference to the attached drawings.

### BRIEF DESCRIPTION OF THE DRAWINGS

FIG. 1 is a side view of a straddled vehicle according to an embodiment.
FIG. 2 is a sectional view taken along a plane extending in a front-rear direction and showing a case of the straddled vehicle of FIG. 1 and its vicinity when an outer lid is opened, and an inner lid is detached.
FIG. 3 is a sectional view taken along a plane extending in the front-rear direction and showing the case of the straddled vehicle of FIG. 1 and its vicinity when a battery is mounted on the case, the inner lid is attached, and the outer lid is closed.
FIG. 4 is a sectional view showing the outer lid, a base, and the case at a front side of the straddled vehicle of FIG. 1.
FIG. 5 is a perspective view showing the base and its vicinity when the outer lid is detached from the straddled vehicle of FIG. 1.
FIG. 6 is a side view showing the base, the outer lid, and their vicinities in the straddled vehicle of FIG. 1.
FIG. 7 is a sectional view taken along line VII-VII of FIG. 6.
FIG. 8 is a sectional view taken along line VIII-VIII of FIG. 6.
FIG. 9 is a sectional view taken along line IX-IX of FIG. 6.
FIG. 10 is a perspective view showing a connection portion between a vehicle body frame and the case and its vicinity when the base is detached from the case in the straddled vehicle of FIG. 1.
FIG. 11 is a sectional perspective view showing an inside of the case in the straddled vehicle of FIG. 1.
FIG. 12 is a sectional view showing the straddled vehicle according to a modified example and taken along a line corresponding to line VIII-VIII of FIG. 6.
FIG. 13 is a sectional view showing the straddled vehicle of another modified example and taken along a line corresponding to line VIII-VIII of FIG. 6.
FIG. 14 is a sectional view showing the straddled vehicle of yet another modified example and taken along a line corresponding to line VIII-VIII of FIG. 6.

### DETAILED DESCRIPTION

Hereinafter, a straddled vehicle according to an embodiment will be described with reference to the attached drawings. In the present specification, a front-rear direction, a left-right direction (lateral direction), and an upper-lower direction are directions when viewed from a rider who is seated on the straddled vehicle.

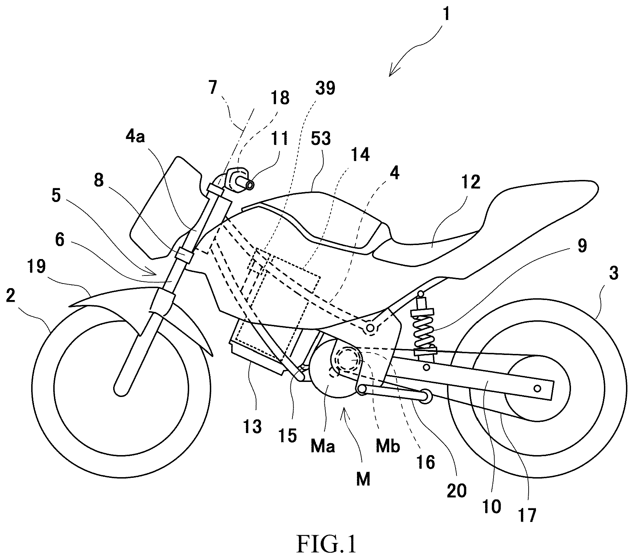

FIG. 1 is a side view of a straddled vehicle (vehicle) 1 according to the present embodiment. As shown in FIG. 1, in the present embodiment, the straddled vehicle 1 is a motorcycle.

The straddled vehicle 1 includes a front wheel 2, a rear wheel 3, and a vehicle body frame 4. The vehicle body frame 4 is supported by the front wheel 2 and the rear wheel 3. The straddled vehicle 1 includes a front fork 5 that connects the front wheel 2 and the vehicle body frame 4 and is located between the front wheel 2 and the vehicle body frame 4. The front fork 5 is coupled to a bracket 8 which is located under a steering shaft 7 so as to be spaced apart from the steering shaft 7 in the upper-lower direction. The front fork 5 extends in an upper, rear, and diagonal direction. The front fork 5 includes a front suspension 6. The front fork 5 can expand and contract in its longitudinal direction when a spring in the front suspension 6 elastically deforms. The front fork 5 expands and contracts in the longitudinal direction to ease shock transmitted to the vehicle body frame 4. The steering shaft 7 connected to the bracket 8 is supported by a head pipe 4a, which is part of the vehicle body frame 4, so as to be angularly displaceable. Moreover, the straddled vehicle 1 includes a rear suspension 9 that connects the rear wheel 3 to a rear portion of the vehicle body frame 4. Furthermore, a swing arm 10 supporting the rear wheel 3 and extending in the front-rear direction is supported by the vehicle body frame 4 so as to be angularly displaceable.

A handlebar 11 held by the rider with his/her hands is located at the steering shaft 7. An outer lid 53 covering a battery insertion opening is located behind the handlebar 11. A seat 12 on which the rider is seated is located behind the outer lid 53. The straddled vehicle 1 includes an electric motor M as a driving source that generates force to be transmitted to the wheel. The electric motor M is mounted on the vehicle body frame 4 so as to be located between the front wheel 2 and the rear wheel 3. In the present embodiment, the electric motor M serves as a prime mover that generates rotational driving force to be transmitted to the rear wheel 3.

The straddled vehicle 1 includes a battery 14 and a case 13 accommodating the battery 14 therein. The battery 14 stores electric power to be supplied to electrical components. Moreover, in the present embodiment, the battery 14 supplies the electric power to the electric motor M. Thus, the electric motor M is driven, and the straddled vehicle 1 travels. The battery 14 is connected to the electric motor M through an electric wire. The case 13 is attached to the vehicle body frame 4.

The electric motor M includes a motor case Ma and a motor drive shaft Mb projecting from the motor case Ma. A sprocket 16 is located at the motor drive shaft Mb so as to rotate together with the motor drive shaft Mb. Instead of the sprocket 16, a gear or a pulley may be used as a rotary member. Then, a chain 17 is connected to the sprocket 16 located at the motor drive shaft Mb. Thus, the driving force output by the motor drive shaft Mb is transmitted to the rear wheel 3 through the chain 17. A member through which the driving force output by the motor drive shaft Mb is transmitted to the rear wheel 3 is not limited to the chain and may be another power transmitting member, such as a belt.

In the present embodiment, an ECU (electronic control unit) 39 is located in front of the case 13. The ECU 39 controls the driving of the electric motor M by adjusting the electric power to be supplied from the battery 14 through a BMU (battery management unit) and an inverter to the electric motor M. Throttle equipment 18 is operated by the rider and controls the driving of the electric motor M in accordance with the operation of the rider.

When the rider drives the straddled vehicle 1, and shock acts on the vehicle body by, for example, unevenness of a traveling path while traveling, the front fork 5 expands and contracts in the longitudinal direction. Since the front suspension 6 expands and contracts to ease the shock to be transmitted to the vehicle body frame 4, the shock transmitted to the rider can be reduced. Thus, the ride quality for the rider can be improved.

Moreover, the straddled vehicle 1 includes a front fender 19 that is connected to the front fork 5 and moves up and down together with the front fork 5 in accordance with the expansion and contraction of the front fork 5. In the present embodiment, the front fender 19 is attached to the front fork 5 so as to project from the front fork 5 in the front-rear direction and cover an upper side of the front wheel 2.

In the present embodiment, the straddled vehicle 1 includes a side stand 20. When the straddled vehicle 1 stops and stands by itself by the side stand 20, the straddled vehicle 1 leans toward a side where the side stand 20 is attached. Thus, the vehicle body is inclined.

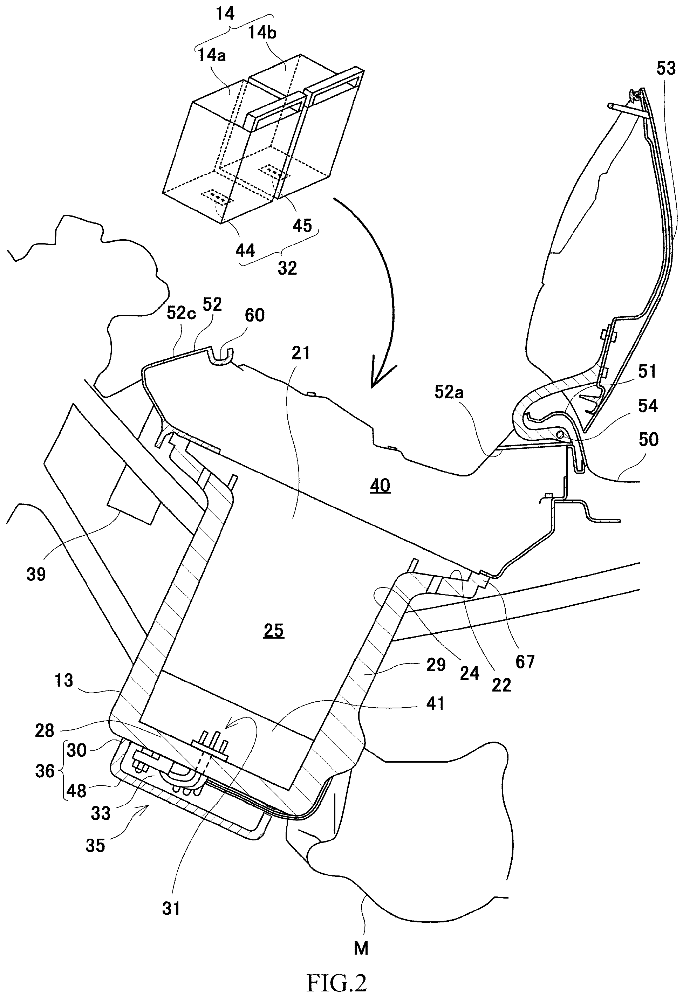

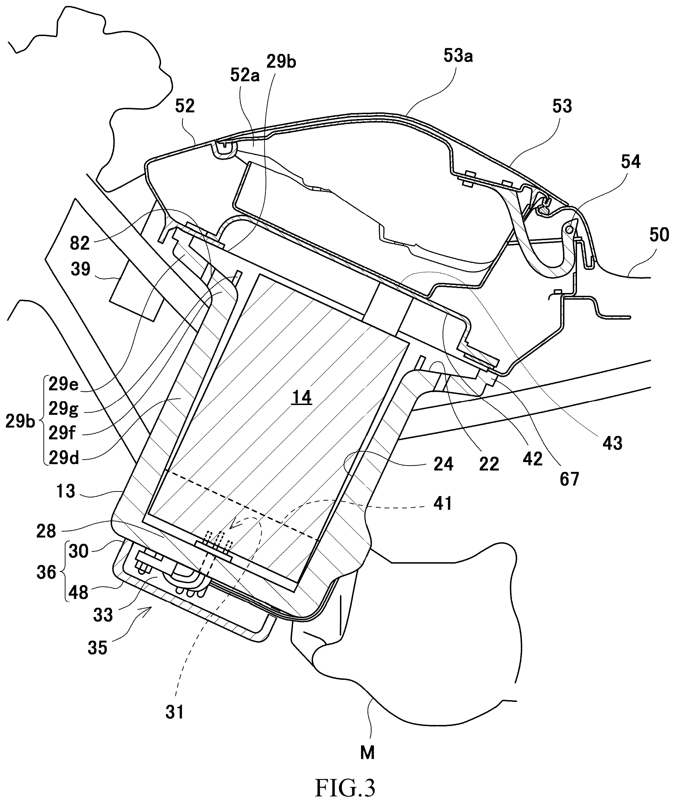

FIG. 2 is a sectional view taken along a plane extending in the front-rear direction and showing the case 13 and its vicinity when the outer lid 53 is opened, and an inner lid 42 located inside the outer lid 53 and covering an upper side of the battery 14 is detached. Moreover, FIG. 3 is a sectional view taken along a plane extending in the front-rear direction and showing the case 13 and its vicinity when the outer lid 53 is closed, and the inner lid 42 located inside the outer lid 53 and covering the upper side of the battery 14 is attached.

As shown in FIGS. 2 and 3, the case 13 is a case that can accommodate the battery 14. The case 13 defines an accommodating space 25 that accommodates the battery 14. In the present embodiment, the case 13 includes the accommodating space 25 that corresponds to two batteries 14a and 14b so as to accommodate the two batteries 14a and 14b. Moreover, the case 13 includes: an inner bottom wall 28 that is inclined downward as it extends rearward; and a peripheral wall 29 that extends upward from the inner bottom wall 28 and surrounds the accommodating space 25. Furthermore, the case 13 includes a case opening 21 that opens the accommodating space 25 of the battery 14 to an upper side such that the battery 14 is put in or taken out from the accommodating space 25. When the case 13 is attached to the straddled vehicle 1, the case 13 is inclined relative to a vertical direction such that the case opening 21 is directed in an upper, rear, and diagonal direction. To be specific, the case 13 is attached to the straddled vehicle 1 so as to be inclined rearward as it extends upward from its lower end.

The accommodating space 25 of the case 13 is configured such that the area of a section of the accommodating space 25 which is orthogonal to an insertion direction of the battery 14 decreases as the accommodating space 25 extends downward. In the present embodiment, the case 13 is configured such that front and rear inner surfaces of the case 13 form a tapered shape, i.e., approach each other as they extend downward. As the inner surface of the case 13 extends downward, the inner surface of the case 13 extends toward an inner side by an upper portion where a step 22 is located and a lower portion 24 that is located under the upper portion and tapers.

Moreover, as shown in FIG. 2, a bottom portion of the case 13 has a double bottom structure 35. The double bottom structure 35 of the bottom portion of the case 13 includes the inner bottom wall 28, an outer bottom wall 48 covering the inner bottom wall 28 from below, and a peripheral wall 30 that connects the outer bottom wall 48 to the inner bottom wall 28. The case 13 is attached to the straddled vehicle 1 so as to be inclined. Therefore, with the case 13 attached to the straddled vehicle 1, the inner bottom wall 28 is inclined downward as it extends rearward. Connectors 31 projecting toward an inside of the accommodating space 25 are located at the inner bottom wall 28 of the case 13. In the present embodiment, the two connectors 31 are located so as to correspond to the first battery 14a and the second battery 14b which are mounted on the case 13.

Wires connected to the connectors 31 are located in a lower space 33 between the outer bottom wall 48 and the inner bottom wall 28 in the double bottom structure 35 of the case 13. In the present embodiment, the lower space 33 is located outside the accommodating space 25 and is adjacent to the accommodating space 25 across the inner bottom wall 28.

The wires connected to the connectors 31 extend inside the lower space 33, extend to an outside from a rear portion of the lower space 33, and extend rearward. The wires extend from the connectors 31, penetrate the inside of the inner bottom wall 28 of the case 13, extend toward the lower space 33, extend rearward in the lower space 33, and extend to the outside of the case 13. In the present embodiment, the outer bottom wall 48 and the peripheral wall 30 are configured separately from the inner bottom wall 28. Moreover, the outer bottom wall 48 and the peripheral wall 30 constitute a lid body 36 as one piece. In the present embodiment, the lower space 33 is defined by the inner bottom wall 28 and the lid body 36 so as to be located between the inner bottom wall 28 and the lid body 36.

The battery 14 includes an output terminal 32 connected to the connectors 31 when the battery 14 is accommodated in the accommodating space 25 of the case 13. In the present embodiment, the first battery 14a includes an output terminal 44, and the second battery 14b includes an output terminal 45. These output terminals 44 and 45 are collectively called the output terminal 32. The connectors 31 of the case 13 and the output terminal 32 of the battery 14 are connected to each other, and therefore, the electric power from the battery 14 can be supplied through the wires to the electric motor M and the like.

As shown in FIG. 2, the case 13 accommodates the two batteries 14a and 14b. Therefore, the case 13 includes a partition 41 that projects from the inner bottom wall 28 of the case 13 to the inside of the accommodating space 25 so as to divide a space for storing the two batteries 14a and 14b lined up in a vehicle width direction in the straddled vehicle 1. Spaces for the two batteries 14a and 14b are separated from each other by the partition 41, and therefore, the batteries 14a and 14b can be located at appropriate positions.

The straddled vehicle 1 includes the inner lid 42 located at an upper side of the case 13. As shown in FIG. 3, the inner lid 42 that closes the case opening 21 is attached to the case 13. After the battery 14 is stored in the case 13, the inner lid 42 covers the upper side of the battery 14 and protects the battery 14. In the present embodiment, the inner lid 42 is fixed to the case 13 by screwing.

As shown in FIGS. 2 and 3, in the present embodiment, the case 13 is attached to the straddled vehicle 1 so as to be located in front of and adjacent to the electric motor M. The case 13 is located between the front fork 5 and the electric motor M in the front-rear direction of the straddled vehicle 1. In the present embodiment, as described below, the case 13 is located so as to be inclined.

As shown in FIG. 3, when the battery 14 is accommodated in the accommodating space 25, and the inner lid 42 is attached at the upper side of the battery 14, the inner lid 42 contacts an upper end 43 of the battery 14. Since the battery 14 contacts the inner lid 42 with the battery 14 accommodated in the case 13, the battery 14 is pressed inside the case 13. While the straddled vehicle 1 is traveling, the battery 14 is pressed by the inner lid 42. Therefore, even when force in the upper-lower direction acts on the straddled vehicle 1 during traveling, the battery 14 can be prevented from moving in the upper-lower direction by the force. In the present embodiment, the case 13 is located between the front wheel 2 and the rear wheel 3, and therefore, the accommodating space 25 is located between the front wheel 2 and the rear wheel 3. Moreover, in the present embodiment, the case 13 is located between the head pipe 4a and the seat 12, and therefore, the accommodating space 25 is located between the head pipe 4a and the seat 12.

In the present embodiment, as described above, the case 13 is attached to the vehicle body frame 4 so as to be inclined rearward as it extends upward from its lower end. Therefore, there is a space which is located in front of the case 13 and at which things can be put. In the present embodiment, the ECU 39 is located at this space located in front of the case 13. Therefore, spaces in the straddled vehicle 1 can be efficiently utilized. Moreover, since the ECU 39 is located in front of the case 13, the ECU 39 can be located at the space that directly receives traveling wind. Thus, the ECU 39 can be efficiently cooled by the traveling wind. Especially, the ECU 39 easily generates heat by the traveling of the straddled vehicle 1. Therefore, by cooling the ECU 39 by the traveling wind, the temperature of the ECU can be maintained at an appropriate temperature even during the traveling of the straddled vehicle 1.

The straddled vehicle 1 includes a base 52 located at the upper side of the case 13. The base 52 is located in front of the seat 12 and above the inner lid 42. The base 52 is attached to the case 13 from above so as to surround the case opening 21 and defines part of the accommodating space 25. To be specific, in the present embodiment, a space inside the base 52 and a space inside the case 13 are collectively called the accommodating space 25. The base 52 includes an opposing portion 60 located around a base opening 52a through which the accommodating space 25 inside the base 52 is open to the upper side. The opposing portion 60 is located outside the base opening 52a and has a closed loop shape that surrounds the base opening 52a. The opposing portion 60 includes a surface that is adjacently located at a radially outer side of the base opening 52a and faces upward. Moreover, the opposing portion 60 includes a below-described opposing surface that is opposed to the outer lid 53 from below when the outer lid 53 is closed. The base 52 includes a non-opposing surface 52c that is located outside the opposing surface and is exposed from the outer lid 53. The non-opposing surface 52c has a closed loop shape that surrounds the opposing surface. The non-opposing surface 52c is part of an appearance surface constituting the appearance of the straddled vehicle 1.

When the battery 14 is accommodated in the case 13 mounted on the straddled vehicle 1, the battery 14 is protected by the case 13, the inner lid 42, and the outer lid 53, and the upper side of the battery 14 is doubly covered with the inner lid 42 and the outer lid 53. In the present embodiment, the base 52 is attached to a flange 67 located at an upper end of the peripheral wall 29 of the case 13. Moreover, in the present embodiment, the base 52 is located in front of the seat 12 and partially embedded in a cover 50 of the straddled vehicle 1, and a portion of the base 52 which projects from the cover 50 constitutes an outer surface of the straddled vehicle 1.

Moreover, the straddled vehicle 1 includes the outer lid 53 that can open and close the base opening 52a. In the present embodiment, the outer lid 53 is attached to an outer lid attaching portion 51 located at the base 52. The case 13 is located between the legs of the rider who straddles the seat 12. An upper end 53a of the outer lid 53 projects upward beyond the seat 12.

The outer lid attaching portion 51 of the base 52 includes a hinge portion 54 by which the outer lid 53 is turnably connected to the base 52. The outer lid 53 turns about the hinge portion 54 to open and close the base opening 52a. The outer lid 53 is configured as a design part that is exposed to the outside and constitutes the appearance of the vehicle body of the straddled vehicle 1. In other words, the straddled vehicle 1 does not include a member that covers the outer lid 53 from the outside.

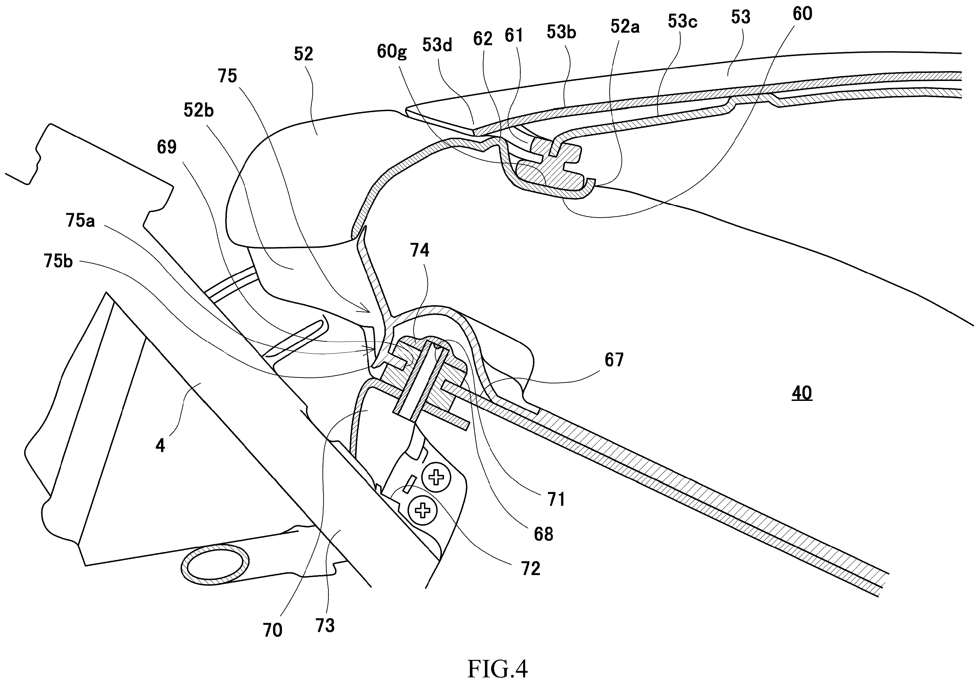

FIG. 4 is a sectional perspective view which is taken along a plane extending in the front-rear direction and orthogonal to a horizontal plane and shows the base 52 and the case 13 with the outer lid 53 closed. As shown in FIG. 4, the straddled vehicle 1 includes a projection that prevents water from entering the accommodating space 25. The projection is located at the outer lid 53, is opposed to the opposing portion 60 of the base 52, and projects downward from the outer lid 53. The projection is located outside the base opening 52a. In other words, the projection is located around the base opening 52a so as to surround the outside of the base opening 52a. In the present embodiment, the projection is realized by a seal 61 that seals a gap between the outer lid 53 and the opposing portion 60 with the outer lid 53 closed. In the present embodiment, with the outer lid 53 closed, the seal 61 is attached to an outer edge of the outer lid 53 so as to face the base opening 52a. The seal 61 is attached to the outer lid 53 so as to project from the outer lid 53 toward the opposing portion 60. The seal 61 is attached to the outer lid 53 such that with the outer lid 53 closed, the seal 61 is located on the opposing portion 60. In the present embodiment, the seal 61 is made of a material having flexibility and is deformable. Since the seal 61 deforms to seal the gap between the opposing portion 60 and the outer lid 53, the gap between the opposing portion 60 and the outer lid 53 in the upper-lower direction can be sealed.

A base space 40 that is part of the accommodating space 25 is located inside the base 52. The base space 40 is used as a space through which the battery 14 passes when the battery 14 is put in or taken out from the case 13. The base space 40 is located above the case 13 in an insertion direction in which the battery 14 is inserted into the case 13. When the outer lid 53 is opened, and the inner lid 42 is opened, the accommodating space 25 of the case 13 is accessible through the base space 40, and the battery 14 can be accommodated in the accommodating space 25. When the inner lid 42 is closed, the base space 40 includes a space located at an upper side of the inner lid 42.

As shown in FIG. 2, when accommodating the battery 14 in the case 13, the outer lid 53 covering the base space 40 is opened. When the outer lid 53 is opened, the inner lid 42 located above the case 13 is detached. When the outer lid 53 is opened, and the inner lid 42 is detached, the accommodating space 25 of the case 13 is accessible from the outside. The battery 14 passes through the base space 40 of the base 52 and the case opening 21 of the case 13 and is accommodated in the accommodating space 25 of the case 13. Then, as shown in FIG. 3, with the battery 14 accommodated in the accommodating space 25 of the case 13, the inner lid 42 is attached to an upper side of the case 13, and the base space 40 is closed by the outer lid 53. Thus, accommodating the battery 14 in the case 13 is completed.

As described above, the opposing portion 60 is located at a radially innermost position of the base 52 so as to face the base opening 52a of the base 52. The seal 61 is attached to the outer lid 53 such that with the outer lid 53 closed, the seal 61 contacts the opposing portion 60.

The base 52 includes an outer wall 62 located outside the seal 61. The outer wall 62 is located adjacent to a contact portion 60g of the opposing portion 60 which contacts the seal 61. With the outer lid 53 closed, the outer wall 62 is located outside the seal 61 and between the outer lid 53 and the opposing portion 60 in the upper-lower direction. In other words, the outer wall 62 is located in a space surrounded by the outer lid 53 and the opposing portion 60. The outer wall 62 projects upward beyond the contact portion 60g of the opposing portion 60 which contacts the seal 61. Moreover, the outer wall 62 projects upward beyond a lower end of the outer lid 53 which is located outside the outer wall 62. In other words, the outer lid 53 includes a lower position 53d covering the outer wall 62 from the outside. Since a labyrinth structure is formed by the outer lid 53 and the outer wall 62 as above, the entering of the water is easily prevented. Moreover, a gap in the upper-lower direction exists between the outer wall 62 and the outer lid 53. Thus, a decrease in pressing force of the seal 61 since the outer wall 62 contacts the outer lid 53 can be prevented.

Moreover, in the present embodiment, the outer lid 53 includes an upper plate 53b and a lower plate 53c. The upper plate 53b is located at an upper side of the lower plate 53c and closes the base opening 52a. The lower plate 53c supports the seal 61. In the present embodiment, an end portion of an outer edge of the lower plate 53c is sandwiched by the seal 61. The seal 61 is attached to the lower plate 53c in such a manner that the end portion of the outer edge of the lower plate 53c is sandwiched by the seal 61. Since the upper plate 53b closes the base opening 52a, water is prevented from entering the accommodating space 25. In addition, since the seal 61 is attached to the lower plate 53c, the seal 61 seals the gap between the lower plate 53c and the opposing portion 60, and this prevents water from entering the accommodating space 25.

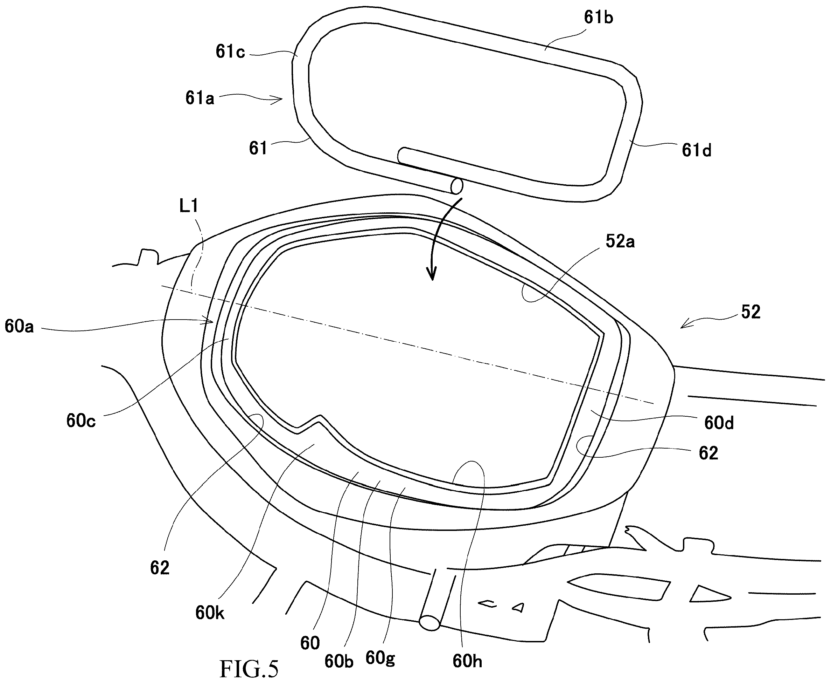

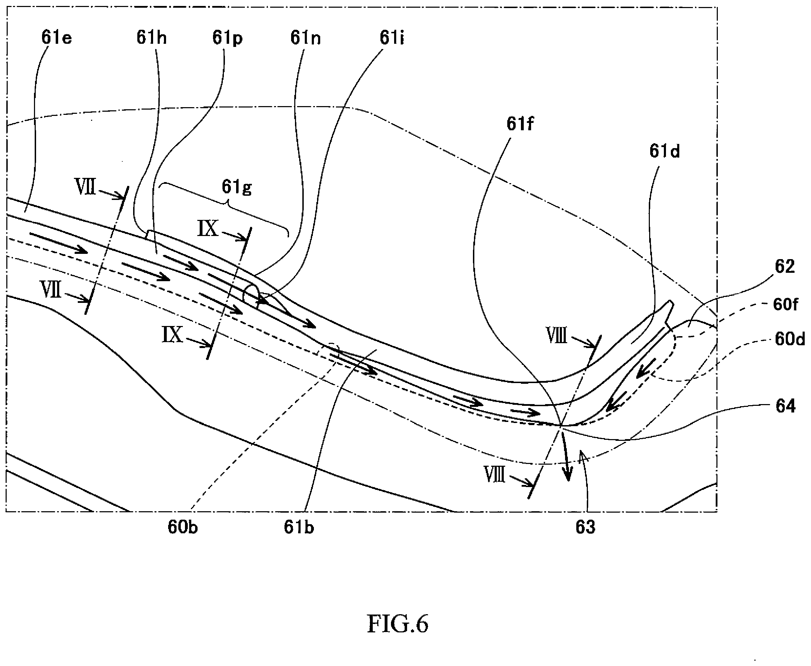

FIG. 5 is a perspective view showing the base 52 of the straddled vehicle 1 and its vicinity when viewed obliquely from above. Moreover, FIG. 6 is a partially enlarged side view showing the base 52 and the outer lid 53 in the straddled vehicle 1 of FIG. 5. FIG. 6 is a diagram showing the base 52 and the outer lid 53 in the straddled vehicle 1 when viewed from a direction that is orthogonal to the vertical direction and the front-rear direction. As shown in FIG 6, for ease of explanation, the outer shape of the outer lid 53 is shown by a one-dot chain line. As shown in FIG. 5, the opposing portion 60 and the seal 61 are located so as to surround the base opening. Therefore, the opposing portion 60 includes a portion 60a extending in the vehicle width direction and a portion 60b extending in the front-rear direction, and the seal 61 includes a portion 61a extending in the vehicle width direction and a portion 61b extending in the front-rear direction. The portion 60a extending in the vehicle width direction in the opposing portion 60 includes a front portion 60c extending in the vehicle width direction and a rear portion 60d extending in the vehicle width direction. The portion 61a extending in the vehicle width direction in the seal 61 includes a front portion 61c extending in the vehicle width direction and a rear portion 61d extending in the vehicle width direction. As shown in FIG. 5, the seal 61 attached to the outer lid 53 is placed on the opposing portion 60.

In the opposing portion 60, the front portion 60c of the portion 60a extending in the vehicle width direction linearly extends substantially in the vehicle width direction. The rear portion 60d of the portion 60a extending in the vehicle width direction is the highest at the middle in the vehicle width direction, and is inclined downward therefrom as it extends outward in the vehicle width direction. Moreover, the portion 60b extending in the vehicle front-rear direction in the opposing portion 60 is inclined downward as it extends rearward from its front end. To be specific, the opposing portion 60 is inclined relative to a horizontal direction. An intermediate portion of the portion extending in the front-rear direction in the opposing portion 60 includes a lowest portion. In the present embodiment, the lowest portion is located at a rear side of the middle portion in the front-rear direction in the opposing portion 60. The opposing portion 60 is inclined upward as it extends rearward from the lowest portion, and the opposing portion is continuous with the portion extending in the vehicle width direction.

As shown in FIG. 5, the opposing portion 60 is substantially line-symmetrical with respect to a center line L1 in the vehicle width direction. Moreover, a guide portion 60h is located at an inner side of the contact portion 60g of the opposing portion 60 which contacts the seal 61. The guide portion 60h restricts the movement of the seal 61 toward the inner side. The guide portion 60h is located at the entire inner periphery of the contact portion 60g of the opposing portion 60 so as to surround the inside of the contact portion 60g. The guide portion 60h does not include a cutout. When the seal 61 is located at the opposing portion 60, the seal 61 is sandwiched between the outer wall 62 and the guide portion 60h.

In the present embodiment, as described above, the case 13 is attached to the vehicle body frame 4 such that the case 13 is inclined rearward as it extends upward from the lower end. Therefore, the base 52 attached onto the case 13 is inclined rearward as it extends upward from the lower end. Moreover, in the present embodiment, the opposing portion 60 of the base 52 is inclined. Since the base 52 is located so as to be inclined, the inclination of the opposing portion 60 of the base 52 is easily realized.

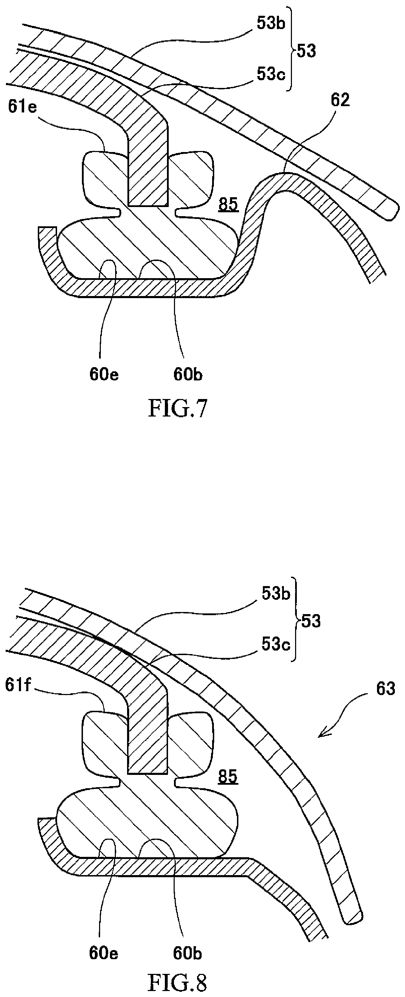

As shown in FIG. 7 described below, the outer wall 62 is located at a radially outer side of the seal 61 surrounding the base opening 52a. The outer wall 62 includes: a portion extending in the front-rear direction; a front portion extending in the vehicle width direction; and a rear portion extending in the vehicle width direction. The front portion extending in the vehicle width direction is located in front of the portion 61c of the seal 61. The rear portion extending in the vehicle width direction is located behind the portion 61d of the seal 61.

The outer wall 62 has a shape that is partially cut out. Specifically, a cutout portion 63 (discharge passage) of the outer wall 62 is located between the portion extending in the vehicle front-rear direction and the rear portion extending in the vehicle width direction. At the cutout portion 63 of the outer wall 62, the outer wall 62 does not cover the seal 61. To be specific, since the outer wall 62 includes the cutout portion 63, the outer wall 62 includes a drain passage 64 extending from the inside of the outer wall 62 to the outside. The cutout portion 63 is formed by cutting out the outer wall 62 such that water having moved to the outside of the opposing portion 60 in the vehicle width direction flows to the outside of the vehicle 1.

Regarding a portion of the outer wall 62 which is located at a lateral side of the base opening 52a, the height of this portion in the upper-lower direction from the opposing portion 60 decreases as this portion extends from the front side to the rear side. The height of the outer wall 62 in the upper-lower direction becomes the smallest at the cutout portion 63. In the present embodiment, at the cutout portion 63, the outer wall 62 is the same in height as the opposing portion 60.

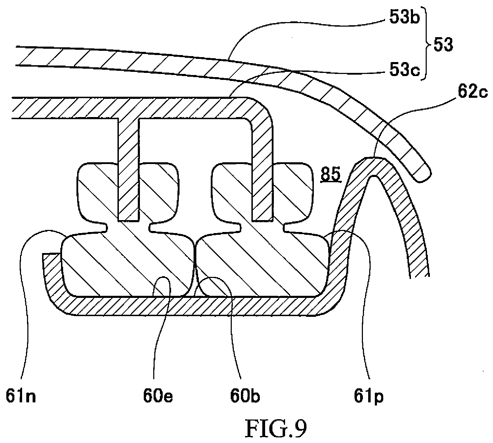

FIG. 7 is a sectional view taken along line VII-VII of FIG. 6. FIG. 8 is a sectional view taken along line VIII-VIII of FIG. 6. FIG. 9 is a sectional view taken along line IX-IX of FIG. 6. As shown in FIG. 7, at the portion 60b of the opposing portion 60 and the portion 61b of the seal 61, the outer wall 62 covers the outside of the portion 61b of the seal 61. On the other hand, as shown in FIG. 8, since the outer wall 62 is cut out at the cutout portion 63, water having entered a space between the seal 61 and the outer wall 62 is prevented from being blocked by the outer wall 62. Therefore, the water having entered the space between the seal 61 and the outer wall 62 flows to the outside of the vehicle 1. In other words, at the cutout portion 63, a gap exists at least between the base 52 and the outer lid 53 in the vehicle width direction. Moreover, in other words, with the outer lid 53 removed, the portion 61b of the seal 61 is not covered with the outer wall 62 at the cutout portion 63 and is exposed to the outside of the vehicle 1 entirely in the upper-lower direction. Therefore, the seal 61 surrounding the base opening 52a includes: a covered portion 61e including a radially outer portion that is covered with the outer wall 62 with the outer lid 53 removed; and an exposed portion 61f including a radially outer portion that is exposed to the outside with the outer lid 53 removed. With the outer lid 53 removed, at least the exposed portion 61f of the seal 61 is located at a position of the opposing portion 60 which is the lowest in the upper-lower direction.

The cutout portion 63 of the outer wall 62 is located at a lowest position of the opposing portion 60 and a lowest position of the seal 61. To be specific, the portion 60b of the opposing portion 60 and the portion 61b of the seal 61 are inclined downward as they extend rearward, and the cutout portion 63 of the outer wall 62 is located at a position corresponding to a front-rear direction rearmost portion of the portion 60b of the opposing portion 60 and a front-rear direction rearmost portion of the portion 61b of the seal 61. Therefore, the outer wall 62 exposes the exposed portion 61f of the seal 61 to the outside of the vehicle 1 entirely in the upper-lower direction at the lowest position of the opposing portion 60.

In the present embodiment, the contact portion 60g of the opposing portion 60 is formed by a smooth flat surface or curved surface which is inclined downward from its front end in the front-rear direction to the cutout portion 63. In other words, there is no blocking portion that blocks the front-rear direction movement of the water having entered the space surrounded by the seal 61, the opposing portion 60, and the outer wall 62. Therefore, the opposing portion 60 can guide in the front-rear direction the water having entered the space between the seal 61 and the outer wall 62.

As described above, in the present embodiment, the straddled vehicle 1 includes the side stand 20 by which the vehicle can stand by itself in a state of being inclined toward a first side in the vehicle width direction (see FIG. 1). When the straddled vehicle 1 stands by itself by the side stand 20, the side stand 20 contacts a ground surface at a side where the side stand 20 exists. Thus, the straddled vehicle 1 is inclined toward the side where the side stand 20 exists in the vehicle width direction. In the present embodiment, the exposed portion 61f of the seal 61 is located at both sides in the vehicle width direction, i.e., the exposed portion 61f of the seal 61 includes two portions. To be specific, the exposed portion 61f includes: a side stand-side exposed portion located at the side where the side stand 20 exists; and an opposite-side exposed portion located at a side where the side stand 20 does not exist. Since the exposed portion 61f is located at both sides in the vehicle width direction, the water is discharged through the side stand-side exposed portion and the opposite-side exposed portion, and therefore, the water in the space between the seal 61 and the outer wall 62 can be efficiently discharged. Thus, the water can be surely prevented from entering the accommodating space 25.

According to a comparison between the position of the side stand-side exposed portion and the position of the opposite-side exposed portion at both sides in the vehicle width direction when the straddled vehicle 1 stands by itself by the side stand 20 and is inclined, the straddled vehicle 1 is inclined toward the side stand 20, and therefore, the side stand-side exposed portion is located lower than the opposite-side exposed portion in the upper-lower direction. To be specific, when the straddled vehicle 1 stands by itself by the side stand 20 and is inclined, the lowest position of the opposing portion 60 is located at a side (first side) of the base opening 52a in the vehicle width direction toward which the straddled vehicle 1 is inclined when the straddled vehicle 1 stands by itself by the side stand 20.

As shown in FIG. 5, the seal 61 has an elongated shape that is longer than the outer periphery of the base opening 52a. The elongated seal 61 extends along the base opening 52a and is located at a radially inner side of the outer wall 62. The seal 61 partially overlaps itself in the radial direction of the base opening 52a. A portion where the seal 61 overlaps itself in the radial direction is referred to as an overlapping portion 61g.

In the present embodiment, the overlapping portion 61g of the seal 61 is located at the side of the base opening 52a in the vehicle width direction toward which the straddled vehicle 1 is inclined when the straddled vehicle 1 stands by itself by the side stand 20. Therefore, when the straddled vehicle 1 stands by itself by the side stand 20, the overlapping portion 61g of the seal 61 is located at the side at which the side stand 20 exists and toward which the straddled vehicle 1 is inclined. Thus, in the seal 61, the overlapping portion 61g is located lower in the upper-lower direction than a side where the overlapping portion 61g does not exist.

Moreover, in the present embodiment, since the seal 61 has an elongated shape as described above, the seal 61 includes two longitudinal end portions. Moreover, as described above, the portions of the opposing portion 60 and the seal 61 which extend in the front-rear direction of the straddled vehicle 1 are inclined downward in the upper-lower direction as they extend from the front side to the rear side in the front-rear direction. The seal 61 includes a first end portion (first longitudinal end portion) 61h and a second end portion (second longitudinal end portion) 61i. The first end portion 61h is located at the front side, and the seal 61 extends rearward therefrom. The second end portion 61i is located at the rear side, and the seal 61 extends forward therefrom. In the seal 61, the second end portion 61i is an end portion opposite to the first end portion 61h. A portion 61n of the seal 61 extends from the first end portion 61h to the rear side of the vehicle 1, and a portion 61p of the seal 61 extends from the second end portion 61i to the front side of the vehicle 1. The portion 61n and the portion 61p overlap each other in the radial direction at the overlapping portion 61g. The first end portion 61h of the seal 61 is located at a radially inner side of the second end portion 61i of the seal 61. The second end portion 61i of the seal 61 is located at a rear side of the first end portion 61h of the seal 61 in the front-rear direction. Therefore, the second end portion 61i of the seal 61 is located lower than the first end portion 61h of the seal 61 in the upper-lower direction. To be specific, the second end portion 61i located at a radially outer side of the first end portion 61h is located lower than the first end portion 61h located at a radially inner side of the second end portion 61i. As shown in FIG. 6, the portion 61n extending from the first end portion 61h of the seal 61 to the rear side of the vehicle 1 and the portion 61p extending from the second end portion 61i of the seal 61 to the front side of the vehicle 1 overlap each other in the radial direction at the overlapping portion 61g.

Since the first end portion 61h and the second end portion 61i overlap each other in the radial direction, the volume of the seal 61 is large at the portion where the first end portion 61h and the second end portion 61i overlap each other in the radial direction. Therefore, at the portion where the first end portion 61h and the second end portion 61i overlap each other in the radial direction, a large space for accommodating the seal 61 is required. In the present embodiment, as shown in FIG. 5, at the portion where the first end portion 61h and the second end portion 61i overlap each other in the radial direction, the opposing portion 60 includes a space 60k in which the seal 61 is located, and a radial width of the space 60k is made large. At the portion where the first end portion 61h and the second end portion 61i overlap each other in the radial direction, the radial width of the space 60k of the opposing portion 60 is made larger than the radial width of the other space of the opposing portion 60, and therefore, the seal 61 is surely held by the opposing portion 60.

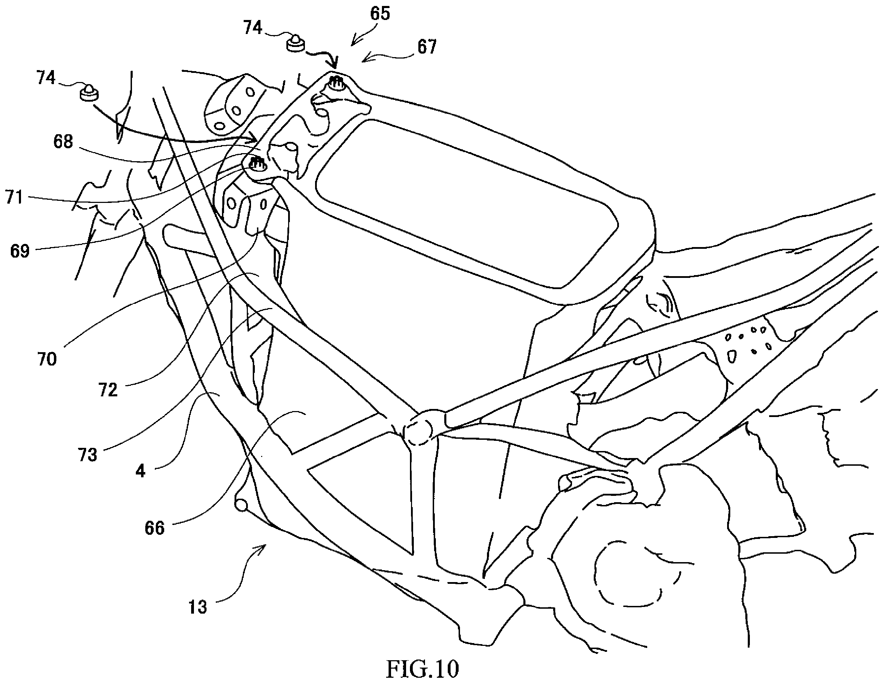

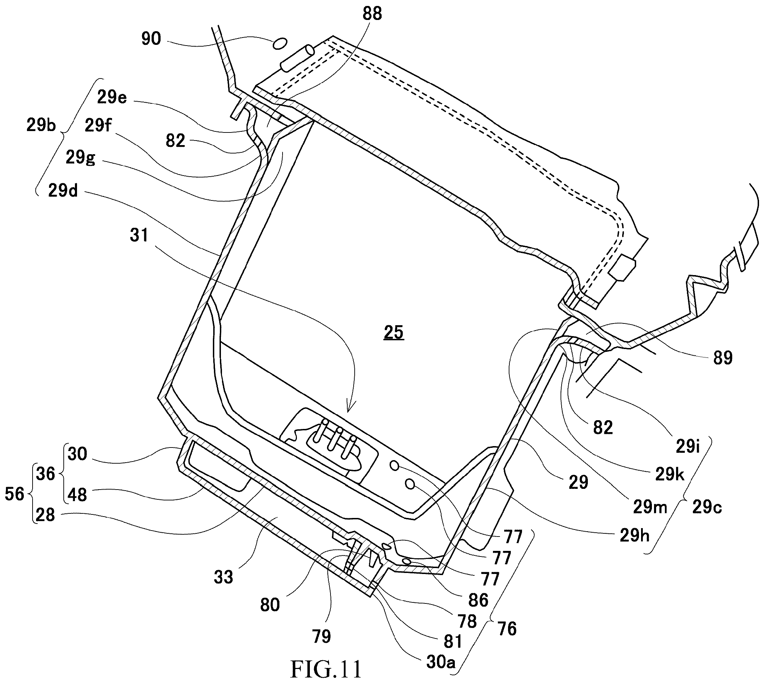

Moreover, in the present embodiment, a connection portion between the case 13 and the vehicle body frame 4 is covered with the base 52 from above. FIG. 10 is a perspective view showing a connection portion 65 between the vehicle body frame 4 and the case 13 and its vicinity when the base 52 is detached from the case 13. FIG. 11 is a sectional perspective view showing an internal structure of the case 13.

In the present embodiment, the case 13 includes a main body 66 and the flange 67. The main body 66 defines the accommodating space 25. The flange 67 is located around the case opening 21 and projects outward in the radial direction from the main body 66. The main body 66 of the case 13 includes the peripheral wall 29 and the inner bottom wall 28 which define the accommodating space 25 that accommodates the battery 14. The flange 67 is a plate portion located at an upper side of the peripheral wall 29. The flange 67 is located around the case opening 21 at the upper side of the peripheral wall 29 and projects outward beyond the peripheral wall 29.

As shown in FIGS. 4 and 10, a mount portion 68 is located in the vicinity of a front-rear direction end portion of the flange 67 of the case 13. Moreover, the mount portion 68 includes a hole 69.

A support bracket 70 is located at a position of the vehicle body frame 4 which is opposed to the mount portion 68. A plate member 72 extending inward in the vehicle width direction from a pipe 73 constituting the vehicle body frame 4 is located at the vehicle body frame 4, and the support bracket 70 is attached onto the plate member 72. The support bracket 70 is formed by bending a plate-shaped member. A protrusion 71 projecting upward is located on an upper surface of the support bracket 70.

When attaching the case 13 to the vehicle body frame 4, the protrusion 71 of the support bracket 70 attached to the vehicle body frame 4 is inserted into the hole 69 of the flange 67 of the case 13 from below. When the protrusion 71 is inserted into the hole 69, a bushing 74 is attached to the protrusion 71. Thus, the case 13 is connected to the vehicle body frame 4.

When the case 13 is connected to the vehicle body frame 4, the base 52 is attached to an upper side of the case 13. As shown in FIG. 4, the base 52 includes an eaves portion 75 which is located at a front position in the front-rear direction of the straddled vehicle 1, projects downward, and covers the protrusion 71 and the mount portion 68 from above. In the present embodiment, the base 52 includes a base main body 52b and the eaves portion 75 including a projecting portion 75a. The base main body 52b is located at an upper side of the case 13 and defines part of the accommodating space 25, and the projecting portion 75a projects downward from the base main body 52b. A lower end 75b of the projecting portion 75a of the eaves portion 75 is located lower than an upper surface of the mount portion 68. In the present embodiment, the projecting portion 75a of the eaves portion 75 extends at the base 52 over the entirety in the vehicle width direction. Therefore, the projecting portion 75a closes a joint between the base 52 and the case 13 over the entirety in the vehicle width direction.

Moreover, in the present embodiment, a bottom wall 56 of the case 13 includes a drain hole. As described above, in the present embodiment, the bottom wall 56 includes the inner bottom wall 28, the outer bottom wall 48, and the peripheral wall 30 that connects the outer bottom wall 48 to the inner bottom wall 28. The bottom wall 56 includes a bottom wall drain hole 76. Since the bottom wall 56 includes the bottom wall drain hole 76, water having entered the accommodating space 25 can be discharged from the accommodating space 25.

In the present embodiment, the inner bottom wall 28 facing the accommodating space 25 includes inner bottom wall drain holes 77 penetrating the inner bottom wall 28. In the present embodiment, the inner bottom wall drain holes 77 are located at the spaces in which the two batteries 14a and 14b are respectively accommodated. Moreover, the lid body 36 including the outer bottom wall 48 and the peripheral wall 30 includes a lid body drain hole 78 penetrating the lid body 36. In the present embodiment, the lid body drain hole 78 is located at a rear portion of the peripheral wall 30 of the lid body 36. The lid body drain hole 78 is located at a position close to a lower end 30a of the peripheral wall 30. Since the inner bottom wall 28 includes the inner bottom wall drain holes 77 penetrating the inner bottom wall 28, the water having entered the accommodating space 25 of the case 13 is guided to the lower space 33. Moreover, since the lid body 36 includes the lid body drain hole 78 penetrating the peripheral wall 30, the water having entered the lower space 33 is discharged to the outside.

In each of the spaces accommodating the battery 14, the inner bottom wall drain hole 77 is located at a position that is low at least when the vehicle body is inclined by using the side stand 20. Moreover, in the present embodiment, the inner bottom wall 28 includes an inner bottom wall drain hole 86 through which the water having entered the accommodating space 25 is directly discharged to the outside without being guided to the lower space 33.

In the present embodiment, a lower partition wall 79 is located inside the lower space 33. The lower partition wall 79 projects upward from the outer bottom wall 48 and extends at the lid body 36 over the entirety in the vehicle width direction. A slight gap between the lower partition wall 79 and the inner bottom wall 28 in the upper-lower direction exists above the lower partition wall 79, but the lower partition wall 79 exists in the lower space 33 substantially entirely in the upper-lower direction. Moreover, an upper partition wall 80 is located inside the lower space 33. The upper partition wall 80 projects downward from the inner bottom wall 28 and extends at the lid body 36 over the entirety in the vehicle width direction. A gap between the upper partition wall 80 and the outer bottom wall 48 in the upper-lower direction is relatively large, and a length of the upper partition wall 80 in the upper-lower direction is shorter than a length of the lower partition wall 79 in the upper-lower direction. Moreover, in the present embodiment, the lower partition wall 79 is located in front of the upper partition wall 80 in the front-rear direction.

The lower partition wall 79 includes a partition wall drain hole 81 penetrating the lower partition wall 79 in the front-rear direction. The partition wall drain hole 81 is located at a position of the lower partition wall 79 which is close to the outer bottom wall 48. To be specific, the partition wall drain hole 81 is located at a position close to a lower end of the lower partition wall 79. In the present embodiment, the partition wall drain hole 81 is also included in the bottom wall drain hole 76.

Moreover, in the present embodiment, an upper portion of the peripheral wall 29 of the case 13 includes peripheral wall drain holes 82 penetrating the peripheral wall 29. Therefore, when water enters the accommodating space 25 through a gap between the base 52 and the case 13, the water flows along the peripheral wall 29 by gravity toward the peripheral wall drain holes 82, flows through the peripheral wall drain holes 82, and is discharged to the outside of the accommodating space 25 of the case 13. In the present embodiment, the peripheral wall drain holes 82 are located at two portions of the case 13 which are located at a front position and a rear position in the front-rear direction.

Moreover, in the present embodiment, the peripheral wall 29 includes a front peripheral wall 29b located at a front side and a rear peripheral wall 29c located at a rear side. The front peripheral wall 29b includes: a front peripheral wall main body portion 29d extending upward from the inner bottom wall 28; a front portion 29e that is bend forward in the front-rear direction from the front peripheral wall main body portion 29d and extends upward as it extends forward; a bent portion 29f at which the front peripheral wall 29b is bent; and a partition plate 29g extending upward from the bent portion 29f. Therefore, even when water flows through a joint between the base 52 and the case 13, the partition plate 29g prevents the water from entering a battery accommodating position of the accommodating space 25. The water is once stored in a front space 88 surrounded by the base 52, the front portion 29e, and the partition plate 29g. The water having entered the front space 88 of the accommodating space 25 flows downward along a wall surface of the front portion 29e and is discharged to the outside through the peripheral wall drain hole 82 of the front peripheral wall 29b. Thus, even when the water enters the front space 88 through the joint between the base 52 and the case 13, the water is prevented from entering the battery accommodating position of the accommodating space 25.

Similarly, the rear peripheral wall 29c includes: a rear peripheral wall main body portion 29h extending upward from the inner bottom wall 28; a rear portion 29i that is bent rearward in the front-rear direction from the rear peripheral wall main body portion 29h and extends upward as it extends rearward; a bent portion 29k at which the rear peripheral wall 29c is bent; and a partition plate 29m extending upward from the bent portion 29k. Therefore, even when water flows through the joint between the base 52 and the case 13, the partition plate 29m prevents the water from entering the battery accommodating position of the accommodating space 25. The water is once stored in a rear space 89 surrounded by the base 52, the rear portion 29i, and the partition plate 29m. The water having entered the rear space 89 of the accommodating space 25 flows downward along a wall surface of the rear portion 29i and is discharged to the outside through the peripheral wall drain hole 82 of the rear peripheral wall 29c. Thus, even when the water enters the rear space 89 through the joint between the base 52 and the case 13, the water is prevented from entering the battery accommodating position of the accommodating space 25.

Moreover, in the present embodiment, the inner lid 42 is located at the case 13 so as to close the case opening 21 of the case 13. Therefore, even when water flows through the base opening 52a, the inner lid 42 prevents the water from entering the battery accommodating position of the accommodating space 25. Moreover, in the present embodiment, the base 52 includes a base drain hole 90 penetrating the base 52. Therefore, even when water enters the base opening 52a, the water can be discharged to the outside through the base drain hole 90. Thus, the water can be surely prevented from entering the battery accommodating position of the accommodating space 25.

In the present embodiment, the seal 61 faces the base opening 52a, is attached to the outer lid 53, and projects toward the opposing portion 60 of the base 52, and the outer wall 62 is located outside the seal 61 and between the outer lid 53 and the opposing portion 60 in the upper-lower direction. Therefore, by both of the seal 61 and the outer wall 62, the water is prevented from entering the accommodating space 25. Even when the water flows over the outer wall 62 and enters the inside of the outer wall 62, the seal 61 prevents the water from entering the accommodating space 25. Moreover, the outer wall 62 exposes the seal 61 or the opposing portion 60 to the outside of the vehicle 1 at the lowest position of the opposing portion 60. In other words, the opposing surface 60e of the opposing portion 60 which is opposed to the outer lid 53 is inclined relative to the horizontal direction. A portion of the opposing surface 60e which is located at a lateral side of the base opening 52a is inclined downward as it extends rearward. Moreover, there is a gap between an upper end 62c of the outer wall 62 and the opposing surface 60e in the upper-lower direction. Therefore, the water having entered the space between the outer wall 62 and the seal 61 flows to a space 85 (see FIGS. 7 and 9) located outside the seal 61 and between the upper end 62c of the outer wall 62 and the opposing surface 60e. The water in the space 85 located outside the seal 61 and between the upper end 62c of the outer wall 62 and the opposing surface 60e flows between the outer wall 62 and the seal 61 toward a lower side of the opposing portion 60 by gravity. Rain water flows toward the exposed portion 61f located at the lowest position of the opposing portion 60. The outer wall 62 does not exist or is cut out at the exposed portion 61f. Therefore, when the water reaches the exposed portion 61f, the water having entered the space between the outer wall 62 and the seal 61 is discharged from the opposing portion 60 to the outside. Thus, the water is prevented from entering the opposing portion 60. In addition, even when the water has entered the opposing portion 60 through the outer wall 62, the water is discharged to the outside of the vehicle 1 and is prevented from being accumulated in the opposing portion 60. Therefore, the water is prevented from entering the case opening 21 through the base opening 52a. At this time, the water in the space 85 flows from the inside of the outer wall 62 to the outside at the cutout portion 63. Therefore, the cutout portion 63 of the outer wall 62 serves as a discharge passage through which the water in the space 85 is discharged to the outside and which extends from the inside of the outer wall 62 to the outside.

Moreover, according to the present embodiment, the seal 61 has an elongated shape. The seal 61 is longer than the outer periphery of the base opening 52a. The seal 61 partially overlaps itself in the radial direction of the base opening 52a. As compared to a joint structure in which both ends of the seal 61 extending around the outer periphery of the base opening 52a are connected to each other, the water can be prevented from entering the accommodating space 25 from the joint of the seal 61 through the base opening 52a.

Moreover, according to the present embodiment, the opposing portion 60 is inclined downward as it extends from the front side to the rear side in the front-rear direction. The portion 61n of the seal 61 which extends rearward from the first longitudinal end portion 61h and the portion 61p of the seal 61 which extends forward from the second longitudinal end portion 61i overlap each other in the radial direction. The second longitudinal end portion 61i located at a radially outer side is located lower than the first longitudinal end portion 61h located at a radially inner side. Therefore, a gap between the portion 61n of the seal 61 which extends rearward from the first longitudinal end portion 61h and the portion 61p of the seal 61 which extends forward from the second longitudinal end portion 61i extends rearward and downward. Thus, even when water enters the gap between the portion 61n of the seal 61 which extends rearward from the first longitudinal end portion 61h and the portion 61p of the seal 61 which extends forward from the second longitudinal end portion 61i at the overlapping portion 61g of the seal 61, the water flows rearward and downward by gravity. Therefore, the water is discharged from the outer lid 53 and the base 52 to the outside through the gap between the portion 61n of the seal 61 which extends rearward from the first longitudinal end portion 61h and the portion 61p of the seal 61 which extends forward from the second longitudinal end portion 61i. Thus, the water having flowed over the outer wall 62 at the overlapping portion 61g of the seal 61 is prevented from entering the accommodating space 25. Moreover, since the gap between the portion 61n of the seal 61 which extends rearward from the first longitudinal end portion 61h and the portion 61p of the seal 61 which extends forward from the second longitudinal end portion 61i extends rearward and downward, the water is prevented from entering the accommodating space 25 through the gap during traveling.

The overlapping portion 61g is located at a position higher than the lowest position of the opposing portion 60. In other words, the overlapping portion 61g is located at a position different from a portion where the outer wall 62 exposes the seal 61 or the opposing portion 60. Therefore, rain water is prevented from reaching the overlapping portion 61g through a portion where the outer wall 62 does not exist or is cut out.

Moreover, according to the present embodiment, when the straddled vehicle 1 stands by itself by using the side stand 20, the lowest position of the opposing portion 60 at which the seal 61 is exposed is located at one side of the base opening 52a in the vehicle width direction at which the side stand 20 exists. Therefore, when the straddled vehicle 1 stands by itself by using the side stand 20, the water having entered the space between the seal 61 and the outer wall 62 can be discharged to the outside of the vehicle 1 through the exposed portion 61k located at the side at which the side stand 20 exists. Thus, the drainage property can be improved.

Moreover, according to the present embodiment, when the straddled vehicle 1 stands by itself by using the side stand 20, the overlapping portion 61g of the seal 61 is located at one side of the base opening 52a in the vehicle width direction which is lower than the other side since the straddled vehicle 1 is inclined. Therefore, when water enters the space between the seal 61 and the outer wall 62, the water is discharged to the outside through the gap between the portion 61n extending rearward from the first longitudinal end portion 61h and the portion 61p extending forward from the second longitudinal end portion 61i at the overlapping portion 61g while the straddled vehicle 1 is in a stop state. Thus, the drainage property can be improved.

Moreover, according to the present embodiment, since the inner lid 42 that can open and close the case opening 21 is included, the water is more surely prevented from entering the accommodating space 25.

Moreover, according to the present embodiment, the peripheral wall 29 includes the peripheral wall drain holes 82. Therefore, even when the water enters the accommodating space 25, the water is discharged to the outside. Thus, the water is prevented from entering an electrical connection portion where the output terminal 32 of the battery 14 and the connectors 31 of the case 13 are connected to each other.

Moreover, according to the present embodiment, since the base 52 includes the eaves portion 75 covering the flange 67 of the case 13 from above, the eaves portion 75 can close the joint between the base 52 and the case 13. Therefore, the water flowing along the base 52 is prevented from entering the accommodating space 25, and the water is prevented from entering the accommodating space 25 through the joint between the base 52 and the case 13. Thus, the waterproof property of the case 13 can be improved.

Moreover, according to the present embodiment, the bottom wall 56 includes the bottom wall drain hole 76 through which the water having entered the accommodating space 25 is discharged from the accommodating space 25. Therefore, even when water enters the accommodating space 25, the water can be discharged through the bottom wall drain hole 76 to the outside of the case 13.

Moreover, according to the present embodiment, the lower partition wall 79 projecting upward from the outer bottom wall 48 and the upper partition wall 80 projecting downward from the inner bottom wall 28 are located inside the lower space 33. Therefore, water is prevented from entering a front side of the lower space 33 by the lower partition wall 79 and the upper partition wall 80. In the present embodiment, the case 13 includes the connectors 31, and the lower space 33 is located so as to be adjacent to the connectors 31. Therefore, the wires extending from the connectors 31 are located inside the lower space 33. In the present embodiment, the lower partition wall 79 and the upper partition wall 80 are located behind the wires. Therefore, water is prevented from entering the front side of the lower space 33, and the wires are prevented from contacting the water.

Moreover, the lower partition wall 79 includes the partition wall drain hole 81 located close to the outer bottom wall 48, and the case 13 and the lid body 36 are inclined downward as they extend rearward. Therefore, when water enters the lower space 33, the water flows toward the outer bottom wall 48 at the lower side by gravity. When the water reaches the outer bottom wall 48, the water flows rearward along the inclined outer bottom wall 48. Since the partition wall drain hole 81 is located at a lower portion of the lower partition wall 79, the water flowing along the outer bottom wall 48 flows rearward through the partition wall drain hole 81 and is discharged through the lid body drain hole 78 to the outside of the lid body 36. Therefore, when water enters the lower space 33, the water can be discharged from the lower space 33 through the partition wall drain hole 81.

Moreover, according to the present embodiment, since the connectors 31 are attached to the inner bottom wall 28, the wires from the connectors 31 are located on a lower surface of the inner bottom wall 28, i.e., at an upper portion of the lower space 33. Furthermore, when water enters the lower space 33, the water flows rearward along the outer bottom wall 48. Therefore, even when water enters the lower space 33, the water flows through a space under the wires. Thus, the water is prevented from contacting the wires and can be discharged to the outside of the lower space 33. Therefore, the case 13 that can protect the wires is realized.

Moreover, according to the present embodiment, the accommodating space 25 accommodates the battery 14 that supplies electric power to the electric motor M that drives the driving wheel of the vehicle. Therefore, water is prevented from contacting the battery 14 and is prevented from contacting the output terminal 32 of the battery 14.

The present embodiment also assumes a case where the vehicle body of the straddled vehicle 1 is cleaned by high pressure water. Even when the vehicle body is cleaned by high pressure water, the water is prevented from entering the battery accommodating position by the above-described water entry preventing structure. Moreover, even when a small amount of high pressure water enters the battery accommodating position, the water can be discharged through the bottom wall drain hole 76 to the outside of the case 13. Thus, rain water is prevented from being accumulated in the case 13.

The above embodiment has described a case where the seal 61 and the outer wall 62 are located at the base 52. However, the above embodiment is not limited to this. The seal 61 and the outer wall 62 may be located at the outer lid 53. The seal 61 may be located at one of the base 52 and the outer lid 53, and the outer wall 62 may be located at the other of the base 52 and the outer lid 53. Each of the seal 61 and the outer wall 62 may be located at any of the outer lid 53 and the base 52 as long as each of the seal 61 and the outer wall 62 is located at the outer lid 53 or the base 52, the space between the outer lid 53 and the base 52 is closed, and water is prevented from entering the base opening 52a.

Moreover, the above embodiment has described a case where the vehicle is an electric straddled vehicle. However, the above embodiment is not limited to this. The straddled vehicle may be a hybrid vehicle driven by an electric motor and an internal combustion engine. Or, the straddled vehicle may be of a type that is driven only by an internal combustion engine. The straddled vehicle may be of any type as long as the straddled vehicle includes the outer lid, the case, and the base, and prevents water from entering the gap between the outer lid and the base when the outer lid is closed.

Moreover, the above embodiment has described a case where the projection that is attached to the outer lid 53, faces the base opening 52a, and projects toward the base 52 is the seal 61. However, the above embodiment is not limited to this. The projection may be located between the outer lid 53 and the opposing portion 60 in the upper-lower direction and close part of the space between the outer lid 53 and the opposing portion 60. As long as the projection closes part of the space between the outer lid 53 and the opposing portion 60, the projection may close the entire space between the outer lid 53 and the opposing portion 60 or may partially close the space between the outer lid 53 and the opposing portion 60. Moreover, the projection does not have to be deformable. The projection may an inner wall located at a radially inner side of the outer wall 62. The projection is located at the outer lid but may be located at the opposing portion.

Moreover, according to the above embodiment, the opposing portion 60 is inclined downward as it extends rearward from its front portion. However, the above embodiment is not limited to this. For example, the opposing portion 60 may be inclined downward as it extends forward from its rear portion. Moreover, the opposing portion 60 may be inclined downward as it extends outward in the vehicle width direction from its vehicle width direction inner portion.

Moreover, the above embodiment has described a case where when the outer lid 53 is detached, the radially outer portion of the exposed portion 61f of the seal 61 is exposed at the lowest position of the opposing portion 60. However, the above embodiment is not limited to this. At the exposed portion 61f that appears when the outer lid 53 is detached, instead of the seal 61, the opposing portion 60 with which the seal 61 contacts may be exposed to the outside. As long as water having entered the space surrounded by the seal 61, the opposing portion 60, and the outer wall 62 is discharged through the drain passage formed by the cutout portion 63 of the outer wall 62, the opposing portion 60 and the seal 61 may not be exposed with the outer lid 53 attached. Moreover, the above embodiment has described a case where the exposed portion 61f is located at both of the left and right sides in the vehicle width direction. However, the above embodiment is not limited to this. The exposed portion 61f may be located at only one of the left and right sides in the vehicle width direction. In this case, there may be only the side stand-side exposed portion that is located at the lowest position of the opposing portion 60 since the straddled vehicle 1 is inclined when the straddled vehicle 1 stands by itself by using the side stand 20. Moreover, the exposed portion 61f may include exposed portions located at one side of the straddled vehicle 1 in the vehicle width direction.

Moreover, the above embodiment has described a case where the radially outer portion of the exposed portion 61f of the seal 61 is exposed at the lowest position of the opposing portion 60. However, the above embodiment is not limited to this. It is desirable that in consideration of the drainage property, a portion where the opposing portion 60 or the seal 61 is exposed be located at the lowest position of the opposing portion 60 with the straddled vehicle 1 inclined since the straddled vehicle 1 stands by itself by using the side stand 20. However, the exposed portion 61f may be located in a region that is low to some extent in the opposing portion 60. The exposed portion 61f may be located at a position that is higher than the lowest position to such an extent that water does not enter the base opening 52a. Similarly, the cutout portion 63 may be located in a region that is low to some extent in the opposing portion 60. The cutout portion 63 may be located at a position that is higher than the lowest position to such an extent that water does not enter the base opening 52a. When the straddled vehicle 1 stands by itself by using a center stand, the vehicle body is maintained in a self-standing state without being inclined, and therefore, there are lowest positions in the opposing portion 60. In this case, the exposed portion 61f may be located at regions located at the lowest positions of the opposing portion 60. Moreover, it is preferable that when the opposing portion 60 extends downward as it extends rearward from its front end, the exposed portion 61f be located lower than a front-rear direction middle portion of the opposing portion 60.

Moreover, the above embodiment has described a case where as shown in FIGS. 7, 8, and 9, the opposing surface 60e of the opposing portion 60 which is opposed to the outer lid 53 is a surface that is horizontal along the vehicle width direction. However, the above embodiment is not limited to this. Instead of the surface that is horizontal along the vehicle width direction, the opposing surface 60e may be inclined. When the opposing surface 60e is inclined downward as it extends from the inside to the outside in the radial direction, the water having entered the space surrounded by the opposing surface 60e, the seal 61, and the outer wall 62 flows outward in the radial direction along the inclination of the opposing surface 60e, and the water is prevented from flowing inward in the radial direction. Therefore, it is preferable that to prevent the water from entering the base opening 52a, the opposing surface 60e be inclined downward as it extends from the inside to the outside in the radial direction.

Moreover, the above embodiment has described a case where the seal 61 is located so as to surround the base opening 52a, and the exposed portion 61f is located so as to face the base opening 52a. However, the above embodiment is not limited to this. The exposed portion 61f may be located at a position away from the base opening 52a in the front-rear direction. The seal 61 may be located so as to surround the base opening 52a while extending through the position away from the base opening 52a in the front-rear direction, the radially outer portion of the seal 61 may be exposed at the position away from the base opening 52a in the front-rear direction, and the exposed portion 61f may be located at the position away from the base opening 52a in the front-rear direction. Since the exposed portion 61f is located away from the base opening 52a, water is prevented from entering the base opening 52a through the exposed portion 61f. Similarly, the cutout portion 63 of the outer wall 62 may be located behind a rear end of the base opening 52a or a rear end of the case opening 21. Since the outer wall 62 is located as above, water is prevented from entering the base opening 52a through the cutout portion 63. Moreover, the cutout portion 63 may be located away from the overlapping portion 61g of the seal 61 in the front-rear direction. Especially, it is preferable that the cutout portion 63 be located away in the rear direction from the overlapping portion 61g of the seal 61 as in the present embodiment.

Moreover, the above embodiment has described a case where the base opening 52a is located in front of the seat 12. However, the above embodiment is not limited to this. The base opening 52a may be located at another position. For example, the base opening 52a may be located behind the seat 12 or may be located right under the seat 12.

Moreover, the above embodiment has described a case where the radially outer portion of the seal 61 is exposed at the lowest position of the opposing portion 60. However, the above embodiment is not limited to this. The position at which the radially outer portion of the seal 61 is exposed is not limited to the lowest position of the opposing portion 60. The position at which the radially outer portion of the seal 61 is exposed may be a position lower than an upper end 60f of the opposing portion 60. When the position at which the radially outer portion of the seal 61 is exposed is lower than the upper end 60f, water having entered a region from the upper end 60f to the exposed portion 61f of the seal 61 is discharged at the exposed portion 61f. Therefore, at the region from the upper end 60f to the exposed portion 61f of the seal 61, the water having entered the inside of the outer wall 62 can be discharged, and the drainage property can be improved.

Moreover, the above embodiment has described a waterproof structure that prevents water from entering the accommodating space of the battery case at the joint between the outer lid 53 and the base 52. However, the above embodiment is not limited to this. The same structure may be applied to case bodies other than the battery case. For example, when there is an accessory case that accommodates gloves, a helmet, and the like, the structure of the above embodiment is applicable to the joint between the outer lid and the opening in the case.

Moreover, the above embodiment has described a case where the case 13 and the base 52 are formed separately. However, the case 13 and the base 52 may be formed integrally. For example, the case 13 and the base 52 may be formed by integral molding. Furthermore, the above embodiment has described a case where the opposing portion 60 is located around the base opening 52a of the base 52. However, the above embodiment is not limited to this. For example, the opposing portion 60 may be located around the case opening 21 of the case 13. Moreover, the above embodiment has described a case where the inner lid 42 that closes the case opening 21 is attached to the upper end of the case 13. However, the above embodiment is not limited to this. The inner lid 42 does not have to be located at the upper end of the case 13. When the waterproof structure between the outer lid 53 and the opposing portion 60 can adequately prevent water from entering the case opening 21, the inner lid 42 does not have to be attached to the case 13.

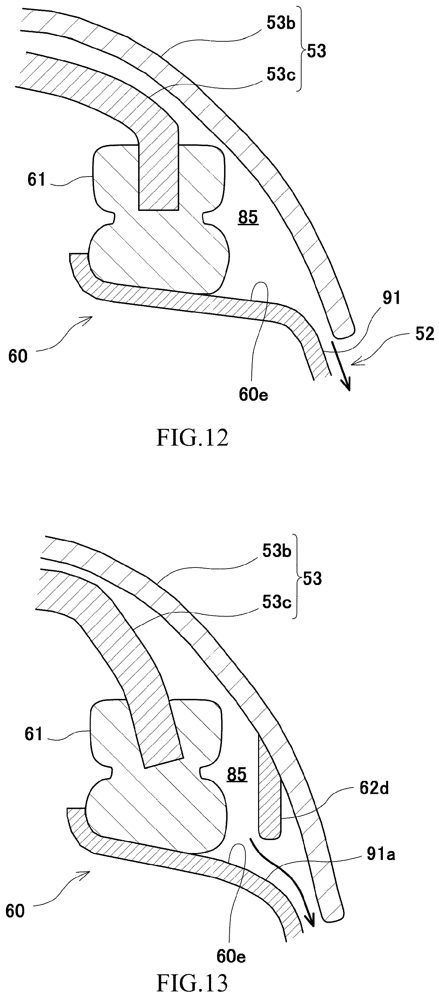

Moreover, the above embodiment has described a case where the outer wall 62 is located at the base 52, and a portion of the base 52 which is located outside the opposing portion 60 projects upward to form the outer wall 62. However, the above embodiment is not limited to this. The outer wall 62 does not have to be located at the base 52. The outer wall 62 may be formed in such a manner that the upper plate 53b of the outer lid 53 extends outward and covers the radially outer portion of the seal. FIG. 12 is a sectional view taken along a line corresponding to line VIII-VIII of FIG. 6 when a portion of the outer lid 53 which extends outward in the radial direction forms the outer wall 62.

In FIG. 12, a portion of the seal 61 which is not the exposed portion 61f and is located at a radially outer side is covered with a portion of the upper plate 53b of the outer lid 53 which extends outward, and a radially outer portion of the upper plate 53b of the outer lid 53 serves as an outer wall that covers the radially outer portion of the seal 61. Moreover, as shown in FIG. 12, a discharge passage 91 through which water is discharged is located between the upper plate 53b of the outer lid 53 and the opposing portion 60 of the base 52. Therefore, when water enters the space 85 surrounded by the opposing portion 60, the seal 61, and the outer lid 53, flows on the opposing portion 60, and reaches the discharge passage 91, the water in the space 85 is discharged through the discharge passage 91 to the outside.

Moreover, as shown in FIG. 12, the opposing surface 60e of the opposing portion 60 is inclined downward as it extends outward in the radial direction. Therefore, water having entered the space 85 surrounded by the opposing portion 60, the seal 61, and the outer lid 53 flows outward in the radial direction by its own weight. Thus, the water having reached the discharge passage 91 flows outward in the radial direction by its own weight and is discharged through the discharge passage 91 to the outside.

In FIG. 12, the discharge passage 91 is located between the upper plate 53b of the outer lid 53 and the base 52. Therefore, even when water enters the space between the outer lid 53 and the seal 61, the water having entered the space 85 surrounded by the outer lid 53, the seal 61, and the opposing portion 60 is discharged through the discharge passage 91 to the outside. Thus, the upper plate 53b of the outer lid 53 prevents the water from entering the opposing portion 60. In addition, even when water enters the opposing portion 60 through the upper plate 53b of the outer lid 53, the water is discharged to the outside of the vehicle 1 and is prevented from being accumulated in the opposing portion 60. Thus, the water is prevented from entering the case opening 21 through the base opening 52a.

Moreover, in FIG. 12, the opposing surface 60e of the opposing portion 60 is inclined downward as it extends outward in the radial direction. However, the opposing surface 60e does not have to be inclined. Even when the opposing surface 60e is horizontal along the vehicle width direction, the water having entered the space between the outer lid 53 and the seal 61 can be discharged to the outside through the discharge passage 91 located between the upper plate 53b and the base 52. Therefore, as long as the water having entered the space between the outer lid 53 and the seal 61 can be discharged to the outside, the opposing surface 60e may be horizontal along the vehicle width direction without being inclined.

Moreover, the above embodiment has described a case where the outer wall 62 is located at the base 52. However, the above embodiment is not limited to this. The outer wall 62 may be located at the outer lid 53. FIG. 13 is a sectional view showing the outer lid 53, the opposing portion 60, and the seal 61 when the outer lid 53 is located at the outer wall. FIG. 13 is a sectional view taken along a line corresponding to line VIII-VIII of FIG. 6.

As shown in FIG. 13, an outer wall 62d is located at the upper plate 53b of the outer lid 53. In the present embodiment, the upper plate 53b covers the outside of the opposing portion 60, and the outer wall 62d extends from a lower wall surface of the upper plate 53b toward the opposing portion 60. At a portion where a discharge passage 91a does not exist, the outer wall 62d located at the outer lid 53 covers a radially outer side of the seal 61. Therefore, at the portion where the discharge passage 91a does not exist, the outer wall 62d prevents water from flowing inward in the radial direction. At a position where the discharge passage 91a is located in FIG. 13, the discharge passage 91a is located between the outer wall 62d and the opposing portion 60 in the upper-lower direction. Since the discharge passage 91a is located under the outer wall 62d, water having entered the space 85 surrounded by the outer lid 53, the seal 61, and the opposing portion 60 is discharged through the discharge passage 91a to the outside. Therefore, the outer wall 62d prevents the water from entering the opposing portion 60. In addition, even when the water has flowed through the outer wall 62d and entered the space 85 surrounded by the outer lid 53, the seal 61, and the opposing portion 60, the water is discharged to the outside of the vehicle 1 and is prevented from being accumulated in the space 85. Thus, the water is prevented from entering the case opening 21 through the base opening 52a.

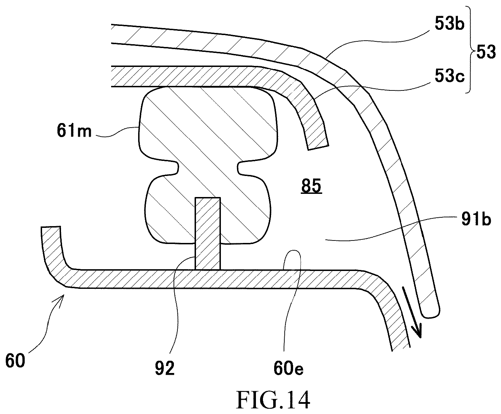

Moreover, the above embodiment has described a case where the seal 61 is attached to the outer lid 53, and the seal 61 attached to the outer lid 53 is located on the opposing portion 60 with the outer lid 53 closed. However, the above embodiment is not limited to this. The seal may be attached to the opposing portion 60. FIG. 14 is a sectional view showing the outer lid 53, the opposing portion 60, and a seal 61m when a connection member 92 extending from the opposing portion 60 toward the outer lid 53 is attached to the opposing portion 60, and the seal 61m is attached to an upper side of the connection member 92. FIG. 14 is a sectional view taken along a line corresponding to line VIII-VIII of FIG. 6.

As shown in FIG. 14, the seal 61m is attached to the connection member 92 extending upward from the opposing portion 60 toward the outer lid 53. In addition, the connection member 92 is attached to the opposing portion 60, and the seal 61m is attached to the opposing portion 60. The seal 61m is located at the opposing portion 60 of the base 52 and projects upward. At this time, as shown in FIG. 14, the seal 61m may be located outside the base opening 52a. In this case, the projection 61m is located around the base opening 52a so as to surround the outside of the base opening 52a.

Moreover, as shown in FIG. 14, the seal 61m may be attached to the opposing portion 60. In the present embodiment, at a portion where a discharge passage 91b does not exist, the upper plate 53b of the outer lid 53 covers a radially outer side of the seal 61m. Therefore, at the portion where the discharge passage 91b does not exist, the upper plate 53b prevents water from entering the radially inner side. At a position where the discharge passage 91b is located in FIG. 14, the discharge passage 91b is located between the upper plate 53b of the outer lid 53 and the opposing portion 60. Since the discharge passage 91b is located between the upper plate 53b of the outer lid 53 and the opposing portion 60, water having entered the space 85 surrounded by the outer lid 53, the seal 61, and the opposing portion 60 is discharged through the discharge passage 91b to the outside. Therefore, the upper plate 53b of the outer lid 53 prevents the water from entering the opposing portion 60. In addition, even when the water has flowed through the upper plate 53b and entered the space 85, the water is discharged to the outside of the vehicle 1 and is prevented from being accumulated in the space 85. Thus, the water is prevented from entering the case opening 21 through the base opening 52a. In FIG. 14, the upper plate 53b of the outer lid 53 serves as the outer wall.

## Claims

1. A straddled vehicle (1) comprising:
a base (52) including
a base opening (52a) through which an accommodating space (25) is open to an upper side and
an opposing portion (60) located around the base opening (52a);
an outer lid (53) that opens and closes the base opening (52a);
a projection that is located at one of the outer lid (53) and the base (52), is located outside the base opening (52a), and projects in an upper-lower direction toward the other of the outer lid (53) and the base (52) when the outer lid (53) is in the position where it closes the base opening (52a); and
an outer wall (62, 62d) that is located at the outer lid (53) or the base (52), faces the projection from an outside, and is located between the outer lid (53) and the opposing portion (60) in the upper-lower direction when the outer lid (53) is in the position where it closes the base opening (52a), wherein:
the opposing portion (60) is inclined relative to a horizontal direction; and
the outer wall (62, 62d) includes a drain passage (64) that is located at a position lower than an upper end of the opposing portion (60) and extends from an inside of the outer wall (62, 62d) to an outside of the outer wall (62, 62d), and the projection is a seal (61) that seals a gap between the outer lid (53) and the opposing portion (60) in the upper-lower direction when the outer lid (53) is in the position where it closes the base opening (52a),
**characterized in that**
the seal (61) has an elongated shape that is longer than an outer periphery of the base opening (52a); and
the seal (61) includes a portion where the seal (61) partially overlaps itself in a radial direction of the base opening (52a) when the outer lid (53) is in the position where it closes the base opening (52a).

2. The straddled vehicle (1) according to claim 1, wherein:
the opposing portion (60) is inclined downward from a first side to a second side in a front-rear direction;
the seal (61) includes a first longitudinal end portion (61h) and a second longitudinal end portion (61i) opposite to the first longitudinal end portion (61h);
a portion of the seal (61) which extends from the first longitudinal end portion (61h) to the second side and a portion of the seal (61) which extends from the second longitudinal end portion (61i) to the first side overlap each other in a radial direction; and
an end portion located at a radially outer side out of the first longitudinal end portion (61h) and the second longitudinal end portion (61i) is located lower than an end portion located at a radially inner side out of the first longitudinal end portion (61h) and the second longitudinal end portion (61i) when the outer lid (53) is in the position where it closes the base opening (52a).

3. The straddled vehicle (1) according to claim 1 or 2, further comprising a side stand (20) by which the straddled vehicle (1) stands by itself in a state of being inclined toward a first side in a vehicle width direction, wherein
when the straddled vehicle (1) stands by itself by using the side stand (20), a lowest position of the opposing portion (60) at which the seal (61) is exposed is located at the first side of the base opening (52a) in the vehicle width direction when the outer lid (53) is in the position where it closes the base opening (52a).

4. The straddled vehicle (1) according to any one of claims 1 to 3, further comprising:
a case (13) including a case opening (21); and
an inner lid (42) that opens and closes the case opening (21), wherein:
the base (52) includes a base space (40) therein; and
the base space (40) includes a space located at an upper side of the inner lid (42).

5. The straddled vehicle (1) according to any one of claims 1 to 3, further comprising a case (13) including
a main body (66) that defines the accommodating space (25),
a case opening (21), and
a flange (67) that is located around the case opening (21) and projects from the main body (66) to a radially outer side, wherein
the base (52) includes an eaves portion (75) that covers the flange (67) from above.

6. The straddled vehicle (1) according to any one of claims 1 to 3, further comprising a case (13) including a bottom wall (28), wherein
the bottom wall (28) includes a bottom wall drain hole (76) through which water having entered the accommodating space (25) is discharged from the accommodating space (25).

7. The straddled vehicle (1) according to any one of claims 1 to 3, further comprising:
a case (13) including a bottom wall (28) and a peripheral wall (29) that extends upward from the bottom wall (28) and surrounds the accommodating space (25) and a case opening (21); and
an inner lid (42) that opens and closes the case opening (21), wherein
the peripheral wall (29) includes a peripheral wall drain hole (82) which is located at a lower side of the inner lid (42) and through which water having entered the accommodating space (25) is discharged from the accommodating space (25).

8. The straddled vehicle (1) according to any one of claims 1 to 7, wherein the accommodating space (25) accommodates a battery (14) that supplies electric power to an electric motor (M) that drives a driving wheel (3) of the straddled vehicle (1).

## Patentansprüche

1. Grätschsitzfahrzeug (1), aufweisend:
eine Basis (52), aufweisend
eine Basisöffnung (52a), durch die ein Aufnahmeraum (25) zu einer Oberseite offen ist, und
einen gegenüberliegenden Abschnitt (60), der um die Basisöffnung (52a) herum angeordnet ist;
einen Außendeckel (53), der die Basisöffnung (52a) öffnet und schließt;
einen Vorsprung, der an einem von dem Außendeckel (53) und der Basis (52) angeordnet ist, außerhalb der Basisöffnung (52a) angeordnet ist und in einer Oben-Unten-Richtung zu dem anderen von dem Außendeckel (53) und der Basis (52) hin vorsteht, wenn der Außendeckel (53) in der Position ist, in der er die Basisöffnung (52a) schließt; und
eine Außenwand (62, 62d), die an dem Außendeckel (53) oder der Basis (52) angeordnet ist, dem Vorsprung von einer Außenseite zugewandt ist und in der Oben-Unten-Richtung zwischen dem Außendeckel (53) und dem gegenüberliegenden Abschnitt (60) angeordnet ist, wenn der Außendeckel (53) in der Position ist, in der er die Basisöffnung (52a) schließt, wobei:
der gegenüberliegende Abschnitt (60) relativ zu einer horizontalen Richtung geneigt ist; und
die Außenwand (62, 62d) eine Ablaufdurchführung (64) aufweist, die an einer Position angeordnet ist, die niedriger als ein oberes Ende des gegenüberliegenden Abschnitts (60) ist, und sich von einer Innenseite der Außenwand (62, 62d) zu einer Außenseite der Außenwand (62, 62d) erstreckt, und der Vorsprung eine Dichtung (61) ist, die einen Spalt zwischen dem Außendeckel (53) und dem gegenüberliegenden Abschnitt (60) in der Oben-Unten-Richtung abdichtet, wenn der Außendeckel (53) in der Position ist, in der er die Basisöffnung (52a) schließt,
**dadurch gekennzeichnet, dass**
die Dichtung (61) eine langgestreckte Form aufweist, die länger als ein Außenumfang der Basisöffnung (52a) ist; und
die Dichtung (61) einen Abschnitt aufweist, an dem die Dichtung (61) sich in einer radialen Richtung der Basisöffnung (52a) teilweise selbst überlappt, wenn der Außendeckel (53) in der Position ist, in der er die Basisöffnung (52a) schließt.

2. Grätschsitzfahrzeug (1) nach Anspruch 1, wobei:
der gegenüberliegende Abschnitt (60) von einer ersten Seite zu einer zweiten Seite in einer Vorne-Hinten-Richtung abwärts geneigt ist;
die Dichtung (61) einen ersten Längsendabschnitt (61h) und einen zweiten Längsendabschnitt (61i), der dem ersten Längsendabschnitt (61h) gegenüberliegt, aufweist;
ein Abschnitt der Dichtung (61), der sich von dem ersten Längsendabschnitt (61h) zu der zweiten Seite erstreckt, und ein Abschnitt der Dichtung (61), der sich von dem zweiten Längsendabschnitt (61i) zu der ersten Seite erstreckt, einander in einer radialen Richtung überlappen; und
ein Endabschnitt, der an einer radial äußeren Seite von dem ersten Längsendabschnitt (61h) und dem zweiten Längsendabschnitt (61i) angeordnet ist, niedriger angeordnet ist als ein Endabschnitt, der an einer radial inneren Seite von dem ersten Längsendabschnitt (61h) und dem zweiten Längsendabschnitt (61i) angeordnet ist, wenn der Außendeckel (53) in der Position ist, in der er die Basisöffnung (52a) schließt.

3. Grätschsitzfahrzeug (1) nach Anspruch 1 oder 2, des Weiteren aufweisend einen Seitenständer (20), durch den das Grätschsitzfahrzeug (1) in einem Zustand des Geneigtseins zu einer ersten Seite in einer Fahrzeugbreitenrichtung hin selbstständig steht, wobei
wenn das Grätschsitzfahrzeug (1) unter Verwendung des Seitenständers (20) selbstständig steht, eine unterste Position des gegenüberliegenden Abschnitts (60), an der die Dichtung (61) freigelegt ist, an der ersten Seite der Basisöffnung (52a) in der Fahrzeugbreitenrichtung angeordnet ist, wenn der Außendeckel (53) in der Position ist, in der er die Basisöffnung (52a) schließt.

4. Grätschsitzfahrzeug (1) nach einem der Ansprüche 1 bis 3, des Weiteren aufweisend:
ein Gehäuse (13), das eine Gehäuseöffnung (21) aufweist; und
einen Innendeckel (42), der die Gehäuseöffnung (21) öffnet und schließt, wobei:
die Basis (52) darin einen Basisraum (40) aufweist; und
der Basisraum (40) einen Raum aufweist, der an einer Oberseite des Innendeckels (42) angeordnet ist.

5. Grätschsitzfahrzeug (1) nach einem der Ansprüche 1 bis 3, des Weiteren aufweisend ein Gehäuse (13), aufweisend
einen Hauptkörper (66), der den Aufnahmeraum (25) definiert,
eine Gehäuseöffnung (21), und
einen Flansch (67), der um die Gehäuseöffnung (21) herum angeordnet ist und von dem Hauptkörper (66) zu einer radial äußeren Seite vorsteht, wobei
die Basis (52) einen Traufabschnitt (75) aufweist, der den Flansch (67) von oben abdeckt.

6. Grätschsitzfahrzeug (1) nach einem der Ansprüche 1 bis 3, des Weiteren aufweisend ein Gehäuse (13), das eine Bodenwand (28) aufweist, wobei
die Bodenwand (28) ein Bodenwand-Ablaufloch (76) aufweist, durch das in den Aufnahmeraum (25) eingedrungenes Wasser aus dem Aufnahmeraum (25) abgeführt wird.

7. Grätschsitzfahrzeug (1) nach einem der Ansprüche 1 bis 3, des Weiteren aufweisend:
ein Gehäuse (13), das eine Bodenwand (28) und eine Umfangswand (29), die sich von der Bodenwand (28) nach oben erstreckt und den Aufnahmeraum (25) und eine Gehäuseöffnung (21) umgibt, aufweist; und
einen Innendeckel (42), der die Gehäuseöffnung (21) öffnet und schließt, wobei
die Umfangswand (29) ein Umfangswand-Ablaufloch (82) aufweist, das an einer Unterseite des Innendeckels (42) angeordnet ist und durch das in den Aufnahmeraum (25) eingedrungenes Wasser aus dem Aufnahmeraum (25) abgeführt wird.

8. Grätschsitzfahrzeug (1) nach einem der Ansprüche 1 bis 7, wobei der Aufnahmeraum (25) eine Batterie (14) aufnimmt, die einen Elektromotor (M), der ein Antriebsrad (3) des Grätschsitzfahrzeugs (1) antreibt, mit elektrischer Energie versorgt.

## Revendications

1. Véhicule à selle (1) comprenant :
une base (52) comportant
une ouverture de base (52a) à travers laquelle un espace de logement (25) est ouvert sur un côté supérieur et
une partie opposée (60) située autour de l'ouverture de base (52a) ;
un couvercle externe (53) qui ouvre et ferme l'ouverture de base (52a) ;
une saillie qui est située au niveau de l'un parmi le couvercle externe (53) et la base (52), est située à l'extérieur de l'ouverture de base (52a), et fait saillie dans une direction supérieure-inférieure vers l'autre parmi le couvercle externe (53) et la base (52) lorsque le couvercle externe (53) est dans la position où il ferme l'ouverture de base (52a) ; et
une paroi externe (62, 62d) qui est située au niveau du couvercle externe (53) ou de la base (52), est orientée vers la saillie depuis l'extérieur, et est située entre le couvercle externe (53) et la partie opposée (60) dans la direction supérieure-inférieure lorsque le couvercle externe (53) est dans la position où il ferme l'ouverture de base (52a), dans lequel :
la partie opposée (60) est inclinée par rapport à une direction horizontale ; et
la paroi externe (62, 62d) comporte un passage d'évacuation (64) qui est situé au niveau d'une position inférieure à une extrémité supérieure de la partie opposée (60) et s'étend d'un intérieur de la paroi externe (62, 62d) à un extérieur de la paroi externe (62, 62d), et la saillie est un joint (61) qui scelle un espace entre le couvercle externe (53) et la partie opposée (60) dans la direction supérieure-inférieure lorsque le couvercle externe (53) est dans la position où il ferme l'ouverture de base (52a),
**caractérisé en ce que**
le joint (61) a une forme allongée qui est plus longue qu'une périphérie externe de l'ouverture de base (52a) ; et
le joint (61) comporte une partie où le joint (61) se chevauche partiellement dans une direction radiale de l'ouverture de base (52a) lorsque le couvercle externe (53) est dans la position où il ferme l'ouverture de base (52a).

2. Véhicule à selle (1) selon la revendication 1, dans lequel :
la partie opposée (60) est inclinée vers le bas d'un premier côté à un second côté dans une direction avant-arrière ;
le joint (61) comporte une première partie d'extrémité longitudinale (61h) et une seconde partie d'extrémité longitudinale (61i) opposée à la première partie d'extrémité longitudinale (61h) ;
une partie du joint (61) qui s'étend de la première partie d'extrémité longitudinale (61h) au second côté et une partie du joint (61) qui s'étend de la seconde partie d'extrémité longitudinale (61i) au premier côté se chevauchent dans une direction radiale ; et
une partie d'extrémité située au niveau d'un côté radialement externe hors de la première partie d'extrémité longitudinale (61h) et de la seconde partie d'extrémité longitudinale (61i) est située plus bas qu'une partie d'extrémité située au niveau d'un côté radialement interne hors de la première partie d'extrémité longitudinale (61h) et de la seconde partie d'extrémité longitudinale (61i) lorsque le couvercle externe (53) est dans la position où il ferme l'ouverture de base (52a).

3. Véhicule à selle (1) selon la revendication 1 ou 2, comprenant en outre une béquille latérale (20) par laquelle le véhicule à selle (1) se tient seul dans un état d'inclinaison vers un premier côté dans une direction de largeur de véhicule, dans lequel
lorsque le véhicule à selle (1) se tient seul en utilisant la béquille latérale (20), une position la plus basse de la partie opposée (60) au niveau de laquelle le joint (61) est exposé est située au niveau du premier côté de l'ouverture de base (52a) dans la direction de largeur de véhicule lorsque le couvercle externe (53) est dans la position où il ferme l'ouverture de base (52a).

4. Véhicule à selle (1) selon l'une quelconque des revendications 1 à 3, comprenant en outre :
un boîtier (13) comportant une ouverture de boîtier (21) ; et
un couvercle interne (42) qui ouvre et ferme l'ouverture de boîtier (21), dans lequel :
la base (52) comporte un espace de base (40) à l'intérieur de celle-ci ; et
l'espace de base (40) comporte un espace situé au niveau d'un côté supérieur du couvercle interne (42).

5. Véhicule à selle (1) selon l'une quelconque des revendications 1 à 3, comprenant en outre un boîtier (13) comportant
un corps principal (66) qui définit l'espace de logement (25),
une ouverture de boîtier (21), et
une bride (67) qui est située autour de l'ouverture de boîtier (21) et fait saillie depuis le corps principal (66) vers un côté radialement externe, dans lequel
la base (52) comporte une partie en saillie (75) qui recouvre la bride (67) par le haut.

6. Véhicule à selle (1) selon l'une quelconque des revendications 1 à 3, comprenant en outre un boîtier (13) comportant une paroi inférieure (28), dans lequel
la paroi inférieure (28) comporte un orifice d'évacuation de paroi inférieure (76) par lequel l'eau ayant pénétré dans l'espace de logement (25) est évacuée de l'espace de logement (25).

7. Véhicule à selle (1) selon l'une quelconque des revendications 1 à 3, comprenant en outre :
un boîtier (13) comportant une paroi inférieure (28) et une paroi périphérique (29) qui s'étend vers le haut à partir de la paroi inférieure (28) et entoure l'espace de logement (25) et une ouverture de boîtier (21) ; et
un couvercle interne (42) qui ouvre et ferme l'ouverture de boîtier (21), dans lequel
la paroi périphérique (29) comporte un orifice d'évacuation de paroi périphérique (82) qui est situé au niveau d'un côté inférieur du couvercle interne (42) et à travers lequel l'eau ayant pénétré dans l'espace de logement (25) est évacuée de l'espace de logement (25).

8. Véhicule à selle (1) selon l'une quelconque des revendications 1 à 7, dans lequel l'espace de logement (25) loge une batterie (14) qui fournit de l'énergie électrique à un moteur électrique (M) qui entraîne une roue motrice (3) du véhicule à selle (1).
